(19) Europäisches Patentamt

European Patent Office

Office européen des brevets

(11) **EP 3 730 370 B1**

(12) **EUROPEAN PATENT SPECIFICATION**

(45) Date of publication and mention
of the grant of the patent:
**03.04.2024  Bulletin 2024/14**

(21) Application number: **19738847.3**

(22) Date of filing: **08.01.2019**

(51) International Patent Classification (IPC):
**B60W 40/09** *(2012.01)*     **G01C 21/34** *(2006.01)*

(52) Cooperative Patent Classification (CPC):
**G01C 21/3407; B60W 60/0013; B60W 60/0053;
G01C 21/3484; G08G 1/0112; G08G 1/0129;
G08G 1/0145; G08G 1/017;** B60W 2520/10;
B60W 2520/105; B60W 2520/14; B60W 2540/30;
B60W 2554/4042; B60W 2554/801;
B60W 2554/802

(86) International application number:
**PCT/CN2019/070859**

(87) International publication number:
**WO 2019/137373 (18.07.2019 Gazette 2019/29)**

(54) **METHOD AND DEVICE FOR ACQUIRING AUTOMATIC DRIVING TRACK**

VERFAHREN UND VORRICHTUNG ZUR ERFASSUNG EINER AUTOMATISCHEN FAHRSPUR

PROCÉDÉ ET DISPOSITIF D'ACQUISITION DE TRAJECTOIRE DE CONDUITE AUTOMATIQUE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **10.01.2018  CN 201810022810**

(43) Date of publication of application:
**28.10.2020  Bulletin 2020/44**

(73) Proprietors:
• **Huawei Technologies Co., Ltd.
Longgang
Shenzhen, Guangdong 518129 (CN)**
• **Tsinghua University
Beijing 100084 (CN)**

(72) Inventors:
• **ZHONG, Haiyan
Shenzhen, Guangdong 518129 (CN)**
• **LI, Shengbo
Beijing 100084 (CN)**
• **DING, Jieyun
Shenzhen, Guangdong 518129 (CN)**
• **CHENG, Bo
Beijing 100084 (CN)**
• **XIN, Long
Beijing 100084 (CN)**
• **GUAN, Yang
Beijing 100084 (CN)**
• **CHEN, Hailiang
Beijing 100084 (CN)**

(74) Representative: **Thun, Clemens
Mitscherlich PartmbB
Patent- und Rechtsanwälte
Karlstraße 7
80333 München (DE)**

(56) References cited:
WO-A1-2016/135561     WO-A1-2017/211836
CN-A- 103 754 172     CN-A- 105 043 402
CN-A- 105 818 810     CN-A- 106 126 960
CN-A- 107 139 923     DE-A1-102011 082 480
US-A1- 2011 015 805     US-A1- 2015 266 475
US-A1- 2017 369 052

**Description**

**TECHNICAL FIELD**

The present invention relates to the field of automobile driving, and in particular, to an automatic driving track obtaining method and apparatus.

**BACKGROUND**

Automatic driving or unmanned driving is a future development trend of an existing automotive technology and an advanced driving auxiliary system. This greatly and sustainably improves road traffic safety, efficiency, and fuel economy. One of key technologies of automatic driving or unmanned driving is autonomous decision making, including four parts: route navigation, situation identification, behavior decision making, and track planning. A main objective of track planning is to provide a vehicle with a safe, comfortable, and executable track to a destination when factors such as vehicle dynamics characteristic, a surrounding dynamic obstacle, a traffic regulation, and a road restriction are considered.

Different drivers may drive a same vehicle, each driver has different driving styles, and a driving style of one driver varies with a surrounding vehicle driving environment. According to a current track planning algorithm, a same standard is used for any driver mainly based on portability, comfort, and safety of a vehicle. Consequently, a driving track planned in this manner cannot match all drivers and has relatively poor personalization.

DE 102011082480A1 disclose a method for determining of a steering torque for an automatic engagement in a transverse guide of a vehicle, the method comprises the steps of: determining an individual driving characteristics of a driver of the vehicle b. Obtaining measurement data determining a point in time at lease over a vicinity of the vehicle and a height of the steering torque c. for the automatic engagement in the transverse guide of the vehicle on the basis of the measurement data, wherein the determination of the height of the steering torque as a function of the individual driving behavior is carried out.

US 2015/266475A1 disclose a method and a device for establishing a trajectory for a vehicle is provided. The method includes the steps: registering coordinates of objects using a sensor; calculating a cost map on the basis of the registered coordinates, wherein the cost map is subdivided into cells and a cost value is assigned to each cell, which cost value describes the presence and/or the vicinity of an object, calculating a cost space, which has a plurality of layers, wherein each layer is subdivided into cells and a cost value is assigned to each cell, wherein the cost values in the respective layers are calculated in each case for a specific orientation of the vehicle, and determining a trajectory that is as cost-effective as possible.

SUMMARY

Embodiments of the present invention provide an automatic driving track obtaining method and apparatus and a corresponding computer-readable storage medium as defined by the independent claims and their dependent claims. A driving track obtained by using the solutions in the embodiments of the present invention can match driving styles of all drivers. This lessens a running-in period in which a driver performs automatic driving.

These aspects or other aspects of the present invention are clearer and more comprehensible in descriptions of the following embodiments.

**BRIEF DESCRIPTION OF DRAWINGS**

To describe the technical solutions in the embodiments of the present invention or in the prior art more clearly, the following briefly describes the accompanying drawings required for describing the embodiments or the prior art. Apparently, the accompanying drawings in the following description show merely some embodiments of the present invention, and a person of ordinary skill in the art may derive other drawings from these accompanying drawings without creative efforts.

FIG. 1 is a schematic flowchart of an automatic driving track obtaining method according to an embodiment of the present invention;

FIG. 2 is a schematic flowchart of another automatic driving track obtaining method according to an embodiment of the present invention;

FIG. 3 is a schematic structural diagram of an automatic driving track obtaining apparatus according to an embodiment of the present invention;

FIG. 4 is a partial schematic structural diagram of an automatic driving track obtaining apparatus according to an embodiment of the present invention;

FIG. 5 is a partial schematic structural diagram of another automatic driving track obtaining apparatus according to an embodiment of the present invention; and

FIG. 6 is a schematic structural diagram of another automatic driving track obtaining apparatus according to an embodiment of the present invention.

## DESCRIPTION OF EMBODIMENTS

To make a person skilled in the art better understand the solutions in the present invention, the following describes the technical solutions in the embodiments of the present invention with reference to the accompanying drawings in the embodiments of the present invention.

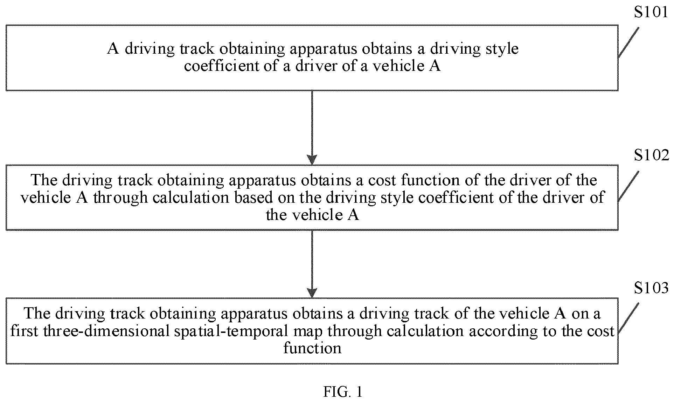

FIG. 1 is a schematic flowchart of an automatic driving track obtaining method according to an embodiment of the present invention. As shown in FIG. 1, the method includes the following steps.

S101. A driving track obtaining apparatus obtains a driving style coefficient of a driver of the vehicle A.

The obtaining a driving style coefficient of a driver of a vehicle A includes:

identifying an identity of the driver of the vehicle A when an automatic driving instruction is received; and
obtaining the driving style coefficient of the driver of the vehicle A based on the identity of the driver of the vehicle A.

Specifically, the driving style coefficient of the driver of the vehicle A is stored in a storage device of the driving track obtaining apparatus, or is stored in a server. When it is detected that the vehicle A is in an automatic driving state, the driving track obtaining apparatus obtains the identity of the driver of the vehicle A through identification, and the driving track obtaining apparatus obtains the driving style coefficient of the driver of the vehicle A from the storage device of the driving track obtaining apparatus or from the server based on the identity of the driver of the vehicle A.

S 102. The driving track obtaining apparatus obtains a cost function of the driver of the vehicle A through calculation based on the driving style coefficient of the driver of the vehicle A.

The cost function is used to represent costs paid when the vehicle A travels from an initial node to a current node in a driving track of the vehicle A.

The cost function is a function constructed based on at least one of a safety item S, a comfort item C, a compliance item R, and an efficiency item T. The safety item S, the comfort item C, the compliance item R, and the efficiency item T are driving habit parameters of the driver of the vehicle A. The safety item S is used to represent a vehicle following habit of the vehicle A and a safe distance between the vehicle A and a surrounding obstacle. The comfort item C is used to represent a velocity change degree and an acceleration change degree of the vehicle A. The compliance item R is used to represent whether the vehicle A complies with traffic regulations. The efficiency item T is used to represent a destination arrival time, braking and steering priorities for obstacle avoidance, and overtaking behavior and yielding behavior generated in a process in which the vehicle A and a surrounding vehicle of the vehicle A travel.

In a feasible embodiment, the cost function is:

$$G = w_1 S + w_2 C + w_3 R + w_4 T,$$

where
$w_1$, $w_2$, $w_3$, and $w_4$ are driving style coefficients of the driver of the vehicle A.

Further, the safety item S is determined based on a longitudinal distance between the vehicle A and a front vehicle of the vehicle A, a difference between a longitudinal velocity of the vehicle A and a longitudinal velocity of the front vehicle of the vehicle A, and a lateral distance between the vehicle A and a left/right adjacent vehicle of the vehicle A. The comfort item C is determined based on a difference between an actual velocity of the vehicle A and a desired velocity of the vehicle A, and a difference between an actual acceleration of the vehicle A and a desired acceleration of the vehicle A. The compliance item R is determined based on a difference between a horizontal coordinate of a location of the vehicle A that is desired by the vehicle A and a horizontal coordinate of a lane centerline of a lane on which the vehicle A is located, a difference between a vertical coordinate of the location of the vehicle A that is desired by the vehicle A and a vertical coordinate of the lane centerline of the lane on which the vehicle A is located, and a difference between the desired velocity of the vehicle A and a maximum limit velocity of the lane on which the vehicle A is located. The efficiency item T is determined based on a difference between a horizontal coordinate of a current location of the vehicle A and the horizontal coordinate of the desired location of the vehicle A, and a difference between a vertical coordinate of the current location of the vehicle A and the vertical coordinate of the desired location of the vehicle A.

In a feasible embodiment, the safety item S, the comfort item C, the compliance item R, and the efficiency item T are respectively represented as follows:

$$S = \frac{c_3}{(\frac{\Delta d}{\Delta v + c_1} - c_2)^p} + c_4 \Delta l \quad ,$$

$$C = (\Delta V)^2 + (\Delta A)^2 \quad ,$$

$$R = (X_{desired} - X_{centerline})^2 + (Y_{desired} - Y_{centerline})^2 + (V_{desired} - V_{limit})^2 \quad ,$$

and

$$T = (X_{desired} - X_{current})^2 + (Y_{desired} - Y_{current})^2 \quad ,$$

where

$c_1$, $c_2$, $c_3$, $c_4$, and $p$ are constants, $\triangle d$ is the longitudinal distance between the vehicle A and the front vehicle of the vehicle A, $\Delta l$ is the lateral distance between the vehicle A and the left/right adjacent vehicle of the vehicle A, $\Delta v$ is the difference between the longitudinal velocity of the vehicle A and the longitudinal velocity of the front vehicle of the vehicle A, $\Delta V$ is the difference between the actual velocity of the vehicle A and the desired velocity of the vehicle A, $\Delta A$ is the difference between the actual acceleration of the vehicle A and the desired acceleration of the vehicle A, $X_{desired}$ and $Y_{desired}$ are respectively the horizontal coordinate and the vertical coordinate of the desired location of the vehicle A, $X_{centerline}$ and $Y_{centerline}$ are respectively the horizontal coordinate and the vertical coordinate of the lane centerline of the lane on which the vehicle A is located, $V_{limit}$ is the maximum limit velocity of the lane on which the vehicle A is located, $V_{desired}$ is the desired velocity of the vehicle A, and $X_{current}$ and $Y_{current}$ are respectively the horizontal coordinate and the vertical coordinate of the current location of the vehicle A.

Before the obtaining the driving track of the vehicle A on a first three-dimensional spatial-temporal map through calculation according to the cost function of the driver, the method further includes:

> converting a two-dimensional spatial map into a second three-dimensional spatial-temporal map; and
> deleting, from the second three-dimensional spatial-temporal map, an area corresponding to a vehicle body safety envelope area of the surrounding vehicle of the vehicle A, to obtain the first three-dimensional spatial-temporal map.

Specifically, the driving track obtaining apparatus extends the two-dimensional spatial map to a second three-dimensional spatial-temporal map including information about a drivable road area. The second three-dimensional spatial-temporal map includes information about a drivable area of the vehicle A. The driving track obtaining apparatus deletes the safety envelope area of the surrounding vehicle from the second three-dimensional spatial-temporal map based on the vehicle body safety envelope area of the surrounding vehicle, to generate the first three-dimensional spatial-temporal map. The vehicle body safety envelope area of the surrounding vehicle is a non-drivable area of the vehicle A. In other words, the driving track obtaining apparatus deletes the non-drivable area of the vehicle A from the second three-dimensional spatial-temporal map, to obtain the first three-dimensional spatial-temporal map. The first three-dimensional spatial-temporal map includes the drivable area of the vehicle A.

The two-dimensional spatial map may be represented as follows:

$$Map = \{(x, y) \mid x \in R_x, y \in R_y\} \quad ,$$

where

$(x,y)$ are respectively a horizontal coordinate and a vertical coordinate in the two-dimensional spatial map, and $R_x$ and $R_y$ are respectively a definition area of the horizontal coordinate $x$ and a definition area of the vertical coordinate $y$.

The first three-dimensional spatial-temporal map may be represented as follows:

$$3DMap = \left\{(x,y,t) \mid L(x) \leq y \leq U(x), x \in R_x, t = 0, \Delta t, 2\Delta t, \ldots, T\Delta t\right\},$$

where

$(x,y,t)$ is spatial-temporal coordinates in a Cartesian coordinate system, and indicates corresponding coordinates of the vehicle A at a moment t; $R_x$ is the definition area corresponding to the horizontal coordinate $x$; $L(\cdot), U(\cdot)$ is an upper/lower boundary value function in which the vertical coordinate y changes with x, and indicates a drivable area to the vehicle A limited according to a road geometric limit; $\Delta t$ is a system time step, in other words, a time interval between two adjacent nodes in the driving track of the vehicle A, and indicates that time density of track planning is consistent with a system running frequency; and a positive integer T indicates a time range for track planning, in other words, a maximum limit quantity of time steps at which the vehicle A travels during each track planning, and T may be also considered as a quantity of nodes in the driving track of the vehicle.

Obtaining the vehicle body safety envelope area of the surrounding vehicle of the vehicle A includes:

obtaining a predicted driving track of the surrounding vehicle of the vehicle A through calculation based on a driving style of a driver, a velocity, an acceleration, and a yaw angle of the surrounding vehicle of the vehicle A; and

determining the vehicle body safety envelope area of the surrounding vehicle of the vehicle A based on the predicted driving track of the surrounding vehicle of the vehicle A and the driving style of the driver of the surrounding vehicle of the vehicle A.

Specifically, the driving track obtaining apparatus collects a linear velocity, the yaw angle, and the like of the surrounding vehicle of the vehicle A. The driving track obtaining apparatus obtains the predicted driving track of the surrounding vehicle of the vehicle A through calculation based on the linear velocity, the yaw angle, and the like of the surrounding vehicle of the vehicle A.

In a feasible embodiment, the driving track obtaining apparatus obtains the linear velocity, the acceleration, the yaw angle, and the like of the surrounding vehicle of the vehicle A based on a velocity sensor, an acceleration sensor, and a yaw angle sensor that are carried in the vehicle A.

Alternatively, the surrounding vehicle carries the velocity sensor, the acceleration sensor, and the yaw angle sensor. After collecting the linear velocity, the acceleration, the yaw angle, and the like of the surrounding vehicle, the surrounding vehicle transmits these pieces of information to the driving track obtaining apparatus of the vehicle A. The driving track obtaining apparatus obtains the predicted driving track of the surrounding vehicle through calculation based on the linear velocity, the yaw angle, and the like of the surrounding vehicle.

The predicted driving track of the surrounding vehicle of the vehicle A may be expressed as follows:

$$M_p = \left\{x_i, y_i, \theta_i, t \mid F(x_i, y_i, \theta_i, t) = 0, t = \Delta t, 2\Delta t, \ldots, T\Delta t\right\}(i = 1, 2 \ldots, N),$$

where

$N$ represents a quantity of surrounding vehicles of the vehicle A, $i$ represents an $i^{th}$ surrounding vehicle of the vehicle A, $x_i, y_i, \theta_i$ respectively represent a horizontal coordinate, a vertical coordinate, and a yaw angle of the $i^{th}$ surrounding vehicle, and $F(\cdot)$ represents the predicted driving track of the surrounding vehicle of the vehicle A at different moments.

Further, a vehicle A' is any one of surrounding vehicles of the vehicle A. The driving track obtaining apparatus generates a vehicle body safety envelope area of the vehicle A' based on a driving track of the vehicle A'.

The driving track obtaining apparatus adjusts the vehicle body safety envelope area of the vehicle A' based on a driving style of the vehicle A'. When a lateral driving style or a longitudinal driving style of the vehicle A' is aggressive, the driving track obtaining apparatus expands the vehicle body safety envelope area of the vehicle A'; or when a lateral driving style or a longitudinal driving style of the vehicle A' is conservative, the driving track obtaining apparatus narrows the vehicle body safety envelope area of the vehicle A'.

According to the foregoing method, the driving track obtaining apparatus determines the vehicle body safety envelope area of the surrounding vehicle of the vehicle A.

Before the obtaining a predicted driving track of the surrounding vehicle of the vehicle A through calculation based on a driving style of a driver, a velocity, an acceleration, and a yaw angle of the surrounding vehicle of the vehicle A, the method further includes:

obtaining the driving style of the driver of the surrounding vehicle of the vehicle A through calculation based on the velocity and the acceleration of the surrounding vehicle of the vehicle A.

Specifically, the velocity of the surrounding vehicle of the vehicle A includes a lateral velocity of the surrounding vehicle of the vehicle A, the acceleration of the surrounding vehicle of the vehicle A includes a lateral acceleration of the surrounding vehicle of the vehicle A, and the driving style of the driver of the surrounding vehicle of the vehicle A includes a lateral driving style. The obtaining the driving style of the driver of the surrounding vehicle of the vehicle A through calculation based on the velocity and the acceleration of the surrounding vehicle of the vehicle A includes:

obtaining lateral velocities and lateral accelerations of N surrounding vehicles of the vehicle A; and

performing the following operations on a lateral velocity and a lateral acceleration of an $i^{th}$ surrounding vehicle in the N surrounding vehicles of the vehicle A, to obtain N first lateral driving styles, where i = 1, 2, ..., and N, and N is an integer greater than 1:

separately inputting the lateral velocity and the lateral acceleration of the $i^{th}$ surrounding vehicle of the vehicle A into a lateral aggressive driving model, a lateral conservative driving model, and a lateral normal driving model, to calculate three first probabilities;

determining the first lateral driving style based on the three first probabilities, where the first lateral driving style is a driving style corresponding to a driving model corresponding to a largest probability in the three first probabilities; and

performing average filtering on the N first lateral driving styles to obtain the lateral driving style of the driver of the surrounding vehicle of the vehicle A.

Specifically, the velocity of the surrounding vehicle of the vehicle A includes a longitudinal velocity of the surrounding vehicle of the vehicle A, the acceleration of the surrounding vehicle of the vehicle A includes a longitudinal acceleration of the surrounding vehicle of the vehicle A, and the driving style of the driver of the surrounding vehicle of the vehicle A includes a longitudinal driving style. The obtaining the driving style of the driver of the surrounding vehicle of the vehicle A through calculation based on the velocity and the acceleration of the surrounding vehicle of the vehicle A includes:

obtaining longitudinal velocities and longitudinal accelerations of N surrounding vehicles of the vehicle A; and

performing the following operations on a longitudinal velocity and a longitudinal acceleration of an $i^{th}$ surrounding vehicle in the N surrounding vehicles of the vehicle A, to obtain N first longitudinal driving styles, where i = 1, 2, ..., and N, and N is an integer greater than 1:

separately inputting the longitudinal velocity and the longitudinal acceleration of the $i^{th}$ surrounding vehicle of the vehicle A into a longitudinal aggressive driving model, a longitudinal conservative driving model, and a longitudinal normal driving model, to calculate three second probabilities;

determining the first longitudinal driving style based on the three second probabilities, where the first longitudinal driving style is a driving style corresponding to a driving model corresponding to a largest probability in the three second probabilities; and

performing average filtering on the N first lateral driving styles to obtain the longitudinal driving style of the driver of the surrounding vehicle of the vehicle A.

Specifically, the foregoing driving styles include the lateral driving style and the longitudinal driving style. The lateral driving style includes an aggressive driving style, a conservative driving style, and a normal driving style. Likewise, the longitudinal driving style includes an aggressive driving style, a conservative driving style, and a normal driving style.

The driving track obtaining apparatus obtains related data of the surrounding vehicle of the vehicle A, including the lateral velocity, the lateral acceleration, the longitudinal velocity, and the longitudinal acceleration. The driving track obtaining apparatus obtains, through offline training based on the related data of the surrounding vehicle, a lateral aggressive driving model M 1, a lateral normal driving model M2, a lateral conservative driving model M3, a longitudinal aggressive driving model M4, a longitudinal normal driving model M5, and a longitudinal conservative driving model M6.

The driving track obtaining apparatus obtains the lateral velocities, the lateral accelerations, the longitudinal velocities, and the longitudinal accelerations of the N surrounding vehicles of the vehicle A. The driving track obtaining apparatus separately inputs a lateral velocity and a lateral acceleration of each of the N surrounding vehicles into the foregoing driving models M1, M2, and M3, to obtain the three first probabilities. The driving track obtaining apparatus determines the first lateral driving style based on the model corresponding to the largest probability in the three first probabilities, to finally obtain the N first lateral driving styles. The driving track obtaining apparatus performs average filtering on the N first lateral driving styles to obtain the lateral driving style of the driver of the surrounding vehicle of the vehicle A.

Likewise, the driving track obtaining apparatus separately inputs a longitudinal velocity and a longitudinal acceleration of each of the N surrounding vehicles into the foregoing driving models M4, M5, and M6, to obtain the three second probabilities. The driving track obtaining apparatus determines the first longitudinal driving style based on the model corresponding to the largest probability in the three second probabilities, to finally obtain the N first longitudinal driving styles. The driving track obtaining apparatus performs average filtering on the N first longitudinal driving styles to obtain the longitudinal driving style of the driver of the surrounding vehicle of the vehicle A.

S103. The driving track obtaining apparatus obtains the driving track of the vehicle A on the first three-dimensional spatial-temporal map through calculation according to the cost function.

The obtaining the driving track of the vehicle A on the first three-dimensional spatial-temporal map according to the cost function includes:

calculating location information of a node in the driving track of the vehicle A to obtain the driving track of the vehicle A, where location information of a second node that is adjacent to a first node in the driving track of the vehicle A and that is after the first node is obtained through calculation based on location information of the first node by using the following method:

obtaining location information of $N_A * N_\Theta$ candidate nodes through calculation based on the location information of the first node, an acceleration change set A of the vehicle A, and a yaw angle change set $\Theta$ of the vehicle A, where $N_A$ is a quantity of elements in the yaw angle change set A, and $N_\Theta$ is a quantity of elements in the acceleration change set $\Theta$; and

evaluating location information of each candidate node in the location information of the $N_A * N_\Theta$ candidate nodes according to a heuristic function and the cost function to obtain the location information of the second node, where the location information of the second node is location information of a node with a smallest evaluation value in the location information of the $N_A * N_\Theta$ candidate nodes, and the heuristic function is used to represent costs that need to be paid when the vehicle A travels from the first node to a target point in the track of the vehicle A.

Herein, $\Delta t$ is an interval between two temporally adjacent nodes in the driving track of the vehicle A, $(X_t, V_t, \theta_t)$ is the location information of the first node, $X_t, Y_t, V_t, \theta_t$ are respectively a horizontal coordinate, a vertical coordinate, a linear velocity, and a yaw angle of the vehicle A on the first three-dimensional spatial-temporal map at a moment t, and

$$\left(X_{t+\Delta t}^k, Y_{t+\Delta t}^k, V_{t+\Delta t}^k, \theta_{t+\Delta t}^k\right)$$ is location information of a k$^{th}$ candidate node in the $N_A * N_\Theta$ candidate nodes obtained through calculation based on the location information of the first node, the acceleration change set A of the vehicle A, and the yaw angle change set $\Theta$ of the vehicle A.

Herein, $X_{t+\Delta t}^k, Y_{t+\Delta t}^k, V_{t+\Delta t}^k, \theta_{t+\Delta t}^k$ are respectively a horizontal coordinate, a vertical coordinate, a linear velocity, and a yaw angle of the k$^{th}$ candidate node,

$$X_{t+\Delta t}^k = X_t + V_{t+\Delta t}^k * \Delta t * \cos\theta_{t+\Delta t} \text{、} \quad Y_{t+\Delta t}^k = Y_t + V_{t+\Delta t}^k * \Delta t * \sin\theta_{t+\Delta t} \text{、} \quad V_{t+\Delta t}^k = V_t + a_{t+\Delta t}^k * \Delta t \text{,}$$

$$\theta_{t+\Delta t}^k = \theta_t + \theta \text{,} \quad a_{t+\Delta t}^k = a_t + a$$ , $\theta$ is any element in the yaw angle change space A, and $a$ is any element in the acceleration change space $\Theta$.

In a specific application scenario, the acceleration change set and the yaw angle change set may be represented as follows:

$$A = \left\{a_{dec}, 0.5a_{dec}, 0, 0.5a_{acc}, a_{acc}\right\} \text{,}$$

and

$$\Theta = \{\pm\theta', \pm0.5\theta', 0\} \text{,}$$

where

$a_{dec}, a_{acc}, \theta'$ are all constants, a quantity of elements in the set A (in other words, the acceleration change set) is 5, and a quantity of elements in the set $\Theta$ (in other words, the yaw angle change set) is 5.

The driving track obtaining apparatus obtains the location information of the $N_A*N_\Theta$ candidate nodes of the vehicle at a moment $t + \Delta t$ based on the location information $(X_t, Y_t, V_t, \theta_t)$ of the first node in the vehicle A at the moment t, the acceleration change set, and the yaw angle change set. For example, when the yaw angle change set and the acceleration change set each include five elements, there are 25 candidate nodes. The location information of the $k^{th}$ candidate node in the $N_A*N_\Theta$ candidate nodes may be represented as follows:

$$Node^k_{t+\Delta t} = (X^k_{t+\Delta t}, Y^k_{t+\Delta t}, V^k_{t+\Delta t}, \theta^k_{t+\Delta t}),$$

$$\theta^k_{t+\Delta t} = \theta_t + \theta,$$

$$a^k_{t+\Delta t} = a_t + a,$$

$$V^k_{t+\Delta t} = V_t + a_{t+\Delta t} * \Delta t,$$

$$X^k_{t+\Delta t} = X_t + V^k_{t+\Delta t} * \Delta t * \cos\theta_{t+\Delta t},$$

and

$$Y^k_{t+\Delta t} = Y_t + V^k_{t+\Delta t} * \Delta t * \sin\theta_{t+\Delta t},$$

where

$$a \in A, \quad \theta \in \Theta, \text{ and } k \in \{1, 2, ..., N_A * N_\Theta\}.$$

According to the foregoing method, after the driving track obtaining apparatus obtains the location information of the $N_A*N_\Theta$ candidate nodes, the driving track obtaining apparatus evaluates location information of each of the $N_A*N_\Theta$ candidate coordinate nodes according to the cost function and the heuristic function, to obtain $N_A*N_\Theta$ evaluation values. The driving track obtaining apparatus uses a candidate node corresponding to a smallest evaluation value in the $N_A*N_\Theta$ evaluation values as a node $Node_{t+\Delta t}$ (in other words, the second node) of the vehicle A at the moment $t + \Delta t$.

Specifically, the driving track obtaining apparatus evaluates the location information of the $k^{th}$ candidate node $Node^k_{t+1}$ in the $N_A*N_\Theta$ candidate nodes according to the cost function and the heuristic function. The functions are specifically as follows:

$$F_k = G_k + H_k,$$

$$H_k = (X^k_{t+\Delta t} - X_{target})^2 + (Y^k_{t+\Delta t} - Y_{target})^2,$$

and

$$G = w_1 S_k + w_2 C_k + w_3 R_k + w_4 T_k,$$

where

$F_k$ is an evaluation function, $H_k$ is the heuristic function; $X_{target}$ and $Y_{target}$ are terminate nodes of the driving track of the vehicle A, and $G_k$ is the cost function.

The driving track obtaining apparatus determines whether the second node $Node_{t+\Delta t}$ is the terminate node in the driving track of the vehicle A. When the second node $Node_{t+\Delta t}$ is not the terminate node in the driving track of the vehicle A, the driving track obtaining apparatus obtains a node, in other words, $Node_{t+2\Delta t}$, of the vehicle A at the moment $t + 2\Delta t$ according to the foregoing method. When the second node $Node_{t+\Delta t}$ is the terminate node in the driving track of the vehicle A, the driving track obtaining apparatus stops the foregoing operation. Therefore, the driving track obtaining apparatus obtains the driving track of the vehicle A.

In a feasible embodiment, the method further includes:

optimizing the driving track of the vehicle A based on a vehicle kinematic model to obtain an optimized driving track; and
sending the optimized driving track to a control apparatus of the vehicle A.

Specifically, the driving track obtaining apparatus establishes a kinematic model of the vehicle A by using a front wheel of the vehicle A as an object.

Herein, $X = (x_f, y_f, \theta, \delta, v_f)$ is used as a system status, and $U = (\dot{\delta}, \dot{v_f})^T$ is used as a system input, where $v_f$ is a linear velocity of the front wheel of the vehicle A, $\theta$ is the yaw angle of the vehicle A, $\delta$ is a steering angle of the front wheel of the vehicle A, and $\dot{\delta}$ is an angular velocity of a front wheel steering angle of the vehicle A.

The driving track obtaining apparatus establishes, based on the kinematic model of the vehicle A, model predictive control to resolve an optimization problem:

$$J(x) = w_1 * \left\| X - X^r \right\|_Q^2 + w_2 \left\| U \right\|_R^2,$$

$$X_0 = X^{start}, X_N = X^{target},$$

$$\dot{X} = F(X, U),$$

$$U_{min} \leq U \leq U_{max},$$

and

$$\phi_n(X) \geq 0, \forall n = 1, 2, \ldots, N - 1,$$

where

$w_1$ and $w_2$ are coefficients; $X^r$ is a preset reference track; Q and R are linear quadratic parameters; $X^{start}$ and $X^{target}$ are respectively state constraints of a start point and an end point of the foregoing driving track; $U_{min}$ and $U_{max}$ are respectively an upper bound and a lower bound of a system input; and $\phi_n(\cdot)$ is a state constraint corresponding to each point in the foregoing driving track.

The driving track obtaining apparatus uses a convex feasible region construction method to resolve a problem that a conventional solution optimization problem is time-consuming and inaccurate, so as to improve solvability and effectiveness. A key to resolve the problem is an iteration. When a $k^{th}$ iteration is performed, a corresponding convex feasible region $F(X_{(k)}) \subset \Gamma$ is calculated for a specific reference track $X_{(k)}^r$ . The driving track obtaining apparatus resolves the following convex optimization problem by using a model predictive control method, to obtain a new reference track.

$$X_{(k+1)} = \arg \min_{X \in F(X_{(k)})} J(X)$$

The iteration ends when the new reference track converges or a gradient of the target function is small enough. In this case, the optimized driving track in consideration of the vehicle dynamics may be obtained.

The driving track obtaining apparatus sends the optimized driving track to the control apparatus of the vehicle A. The control apparatus converts the optimized driving track into a driving instruction that can be executed by the control apparatus, and the control apparatus drives the vehicle A based on the driving instruction.

In a feasible embodiment, after the optimized driving track is sent to the control apparatus of the vehicle A, the method further includes:

obtaining operation information of the driver of the vehicle A and surrounding vehicle information when it is detected that the driver of the vehicle A takes over the vehicle A;

adjusting the driving style coefficient of the driver of the vehicle A based on the operation information and the surrounding vehicle information to obtain an adjusted driving style coefficient; and

storing the adjusted driving style coefficient.

Specifically, the driving style coefficient of the driver of the vehicle A includes a coefficient of the safety item S, a coefficient of the comfort item C, a coefficient of the compliance item R, and a coefficient of the efficiency item T, and the driving style coefficient of the driver of the vehicle A includes the coefficient of the safety item S, the coefficient of the comfort item C, and the coefficient of the efficiency item T. The adjusting the driving style coefficient of the driver of the vehicle A based on the operation information and the surrounding vehicle information to obtain an adjusted driving style coefficient includes:

decreasing the coefficient of the safety item S when the surrounding vehicle information includes that there is a vehicle around the vehicle A, and the operation information includes accelerating without steering; or

increasing or decreasing the coefficient of the safety item S and the coefficient of the efficiency item T when the surrounding vehicle information includes that there is a vehicle around the vehicle A, and the operation information includes steering with accelerating; or

increasing or decreasing the coefficient of the safety item S when the surrounding vehicle information includes that there is a vehicle around the vehicle A, and the operation information includes steering with a constant-velocity; or

increasing the coefficient of the safety item S when the surrounding vehicle information includes that there is a vehicle around the vehicle A, and the operation information includes decelerating without steering; or

increasing or decreasing the coefficient of the safety item S and the coefficient of the efficiency item T when the surrounding vehicle information includes that there is a vehicle around the vehicle A, and the operation information includes steering with decelerating; or

increasing the coefficient of the safety item S and the coefficient of the efficiency item T when the surrounding vehicle information includes that there is no vehicle around the vehicle A, and the operation information includes accelerating without steering or decelerating without steering.

Specifically, the operation information of the driver of the vehicle A includes: accelerating without steering, steering with accelerating, constant-velocity driving without steering, steering with a constant-velocity, decelerating without steering, steering with decelerating, and the like. The surrounding vehicle information includes that there is a vehicle around the vehicle A and there is no vehicle around the vehicle A.

For a specific manner in which the driving track obtaining apparatus adjusts the driving style coefficient based on the operation information of the driver of the vehicle A and the surrounding vehicle information, refer to Table 1.

**Table 1**

|  | Accelerating without steering | Steering with accelerating | Constant-velocity driving without steering | Steering with a constant-velocity | Decelerating without steering | Steering with decelerating |
|---|---|---|---|---|---|---|
| There is a surrounding vehicle | Decrease a coefficient of a safety item | Increase or decrease a coefficient of a safety item and a coefficient of an efficiency item | N/A | Increase or decrease a coefficient of a safety item | Increase a coefficient of a safety item | Increase or decrease a coefficient of a safety item and a coefficient of an efficiency item |
| There is no surrounding vehicle | Increase a coefficient of a comfort item and a coefficient of an efficiency item | N/A | N/A | N/A | Increase a coefficient of a comfort item and a coefficient of an efficiency item | N/A |

As shown in Table 1, the driving track obtaining apparatus decreases the coefficient $w_1$ of the safety item S when there is a vehicle around the vehicle A and when it is determined that the vehicle A accelerates without steering. Specifically, for example, the coefficient $w_1$ of the safety item S, the coefficient $w_2$ of the comfort item C, the coefficient $W_3$ of the compliance item T, and the coefficient $w_4$ of the efficiency item T each correspond to a value range (0, 1). The driving track obtaining apparatus may decrease the value range of the coefficient $w_1$ of the safety item S to (0, 0.5) or (0, 0.6), and does not change the value range corresponding to each of the coefficient $w_2$ of the comfort item C, the coefficient $W_3$ of the compliance item T, and the coefficient $w_4$ of the efficiency item T.

The driving track obtaining apparatus obtains M groups of $w_1$, $w_2$, $W_3$, and $w_4$ from value ranges corresponding to $w_1$, $w_2$, $W_3$, and $w_4$. In other words, the driving track obtaining apparatus separately obtains M values from the value ranges corresponding to $w_1$, $w_2$, $W_3$, and $w_4$, where M is an integer greater than 1. The driving track obtaining apparatus processes the M groups of $w_1$, $w_2$, $W_3$, and $w_4$ according to a genetic algorithm to obtain M predicted driving tracks.

Specifically, the driving track obtaining apparatus randomly generates a parent group of the genetic algorithm based on the foregoing M groups of $w_1$, $w_2$, $W_3$, and $w_4$, and sets a related parameter of the genetic algorithm. The driving track obtaining apparatus separately performs a cross operation and a variation operation on the foregoing M groups of $w_1$, $w_2$, $W_3$, and $w_4$ based on the parent group of the genetic algorithm and the specified related parameter of the genetic algorithm, to obtain the M predicted driving tracks. The M predicted driving tracks are in a one-to-one correspondence with the foregoing M groups of $w_1$, $w_2$, $W_3$ and $w_4$. The driving track obtaining apparatus collects an actual driving track of the vehicle A, and obtains a similarity between each of the M driving tracks and the actual driving track. The driving track obtaining apparatus obtains a group of $w_1$, $w_2$, $W_3$, and $w_4$ corresponding to a driving track that is most similar to the actual driving track, and uses the group of $w_1$, $w_2$, $W_3$, and $w_4$ as a second driving style coefficient. The driving track obtaining apparatus stores the second driving style coefficient in the driving track obtaining apparatus or in the server, to replace a first driving style coefficient. The first driver style coefficient is a driving style coefficient that is of the driver of the vehicle A and that is stored in the storage device of the driving track obtaining apparatus or in the server.

That the driving track obtaining apparatus increases or decreases the coefficient of the safety item S and the coefficient of the efficiency item T when there is a vehicle around the vehicle A and when it is determined that the vehicle A steers with acceleration or steers with deceleration includes: The driving track obtaining apparatus increases or decreases the value range of the coefficient $w_1$ of the safety item S and the value range of the coefficient $w_4$ of the efficiency item T, and does not change the value range of the coefficient $w_2$ of the comfort item C and the value range of the coefficient $W_3$ of the compliance item R. For example, the coefficient $w_1$ of the safety item, the coefficient $w_2$ of the comfort item C, the coefficient $W_3$ of the compliance item T, and the coefficient $w_4$ of the efficiency item T each correspond to a value range (0, 1). The driving track obtaining apparatus respectively increases the value range of the coefficient $w_1$ of the safety item S and the value range of the coefficient $w_4$ of the efficiency item T to (1, 1.5) and (1, 2); or the driving track obtaining apparatus respectively decreases the value range of the coefficient $w_1$ of the safety item S and the value range of the coefficient $w_4$ of the efficiency item T to (0, 0.2) and (0, 0.1). Then, the driving track obtaining apparatus obtains the second driving style parameter according to the foregoing method, and stores the second driving style coefficient in the storage device of the driving track obtaining apparatus or in the server, to replace the first driving style coefficient.

Specifically, when the driver of the vehicle A takes over the vehicle A this time, and when there is a vehicle around the vehicle A and the vehicle A steers with acceleration or steers with deceleration, the driving track obtaining apparatus performs a first operation on the value range of the coefficient $w_1$ of the safety item S and the value range of the coefficient $w_4$ of the efficiency item T, and does not change the value range of the coefficient $w_2$ of the comfort item C and the value range of the coefficient $W_3$ of the compliance item R. The first operation includes increasing or decreasing the value range of the coefficient $w_1$ of the safety item S and the value range of the coefficient $w_4$ of the efficiency item T. The driving track obtaining apparatus obtains the second driving style coefficient according to the foregoing method, and stores the second driving style coefficient in the storage device of the driving track obtaining apparatus or in the server, to replace the first driving style coefficient. When the driver of the vehicle A takes over the vehicle A next time, and when there is a vehicle around the vehicle A and the vehicle A steers with acceleration or steers with deceleration, the driving track obtaining apparatus performs a second operation on the value range of the coefficient $w_1$ of the safety item S and the value range of the coefficient $w_4$ of the efficiency item T, and does not change the value range of the coefficient $w_2$ of the comfort item C and the value range of the coefficient $W_3$ of the compliance item R. The second operation includes increasing or decreasing the value range of the coefficient $w_1$ of the safety item S and the value range of the coefficient $w_4$ of the efficiency item T. The first operation is inconsistent with the second operation. The driving track obtaining apparatus obtains the second driving style coefficient according to the foregoing method, and stores the second driving style coefficient in the storage device of the driving track obtaining apparatus or in the server, to replace the first driving style coefficient.

The driving track obtaining apparatus increases or decreases the coefficient $w_1$ of the safety item S when there is a vehicle around the vehicle A and when it is determined that the vehicle A steers with a constant-velocity. Specifically, the driving track obtaining apparatus increases or decreases the value range of the coefficient $w_1$ of the safety item S, and does not change the value ranges corresponding to the coefficient $w_2$ of the comfort item C, the coefficient $W_3$ of the compliance item R, and the coefficient $w_4$ of the efficiency item T. Then, the driving track obtaining apparatus obtains the second driving style parameter according to the foregoing method, and stores the second driving style coefficient in the storage device of the driving track obtaining apparatus or in the server, to replace the first driving style coefficient.

Specifically, when the driver of the vehicle A takes over the vehicle A this time, and when there is a vehicle around the vehicle A and the vehicle A steers with a constant-velocity, the driving track obtaining apparatus performs a first operation on the value range of the coefficient $w_1$ of the safety item S, and does not change the value range of the coefficient $w_2$ of the comfort item C, the value range of the coefficient $W_3$ of the compliance item R, and the value range of the coefficient $w_4$ of the efficiency item T. The first operation includes increasing or decreasing the value range of the coefficient $w_1$ of the safety item S. The driving track obtaining apparatus obtains the second driving style coefficient according to the foregoing method, and stores the second driving style coefficient in the storage device of the driving track obtaining apparatus or in the server, to replace the first driving style coefficient. When the driver of the vehicle A takes over the vehicle A next time, and when there is a vehicle around the vehicle A and the vehicle A steers with a constant-velocity, the driving track obtaining apparatus performs a second operation on the value range of the coefficient $w_1$ of the safety item S, and does not change the value range of the coefficient $w_2$ of the comfort item C, the value range of the coefficient $W_3$ of the compliance item R, and the value range of the coefficient $w_4$ of the efficiency item T. The second operation includes increasing or decreasing the value range of the coefficient $w_1$ of the safety item S. The first operation is inconsistent with the second operation. The driving track obtaining apparatus obtains the second driving style coefficient according to the foregoing method, and stores the second driving style coefficient in the storage device of the driving track obtaining apparatus or in the server, to replace the first driving style coefficient.

The driving track obtaining apparatus increases the coefficient of the safety item T when there is a vehicle around the vehicle A and when it is determined that the vehicle A decelerates without steering. Specifically, the driving track obtaining apparatus increases the value range of the coefficient $w_1$ of the safety item T, and does not change the value ranges corresponding to the coefficient $w_2$ of the comfort item C, the coefficient $W_3$ of the compliance item R, and the coefficient $w_4$ of the efficiency item T. Then, the driving track obtaining apparatus obtains the second driving style parameter according to the foregoing method, and stores the second driving style coefficient in the storage device of the driving track obtaining apparatus or in the server, to replace the first driving style coefficient.

The driving track obtaining apparatus does not adjust the driving style parameter of the driver when there is a vehicle around the vehicle A and when it is determined that the vehicle A drives at a constant velocity without steering.

The driving track obtaining apparatus increases the coefficient of the comfort item C and the coefficient of the efficiency item T when there is no vehicle around the vehicle A and when it is determined that the vehicle A accelerates without steering or decelerates without steering. Specifically, the driving track obtaining apparatus increases the value ranges corresponding to the coefficient $w_2$ of the comfort item C and the coefficient $w_4$ of the efficiency item T, and does not change the value ranges corresponding to the coefficient $w_1$ of the safety item T and the coefficient $W_3$ of the compliance item S. Then, the driving track obtaining apparatus obtains the second driving style coefficient according to the foregoing method, and stores the second driving style coefficient in the storage device of the driving track obtaining apparatus or in the server, to replace the first driving style coefficient. The driving track obtaining apparatus does not adjust the driving style parameter of the driver of the vehicle A when it is determined that the vehicle A steers with acceleration, drives at a constant velocity without steering, steers with a constant-velocity, or steers with deceleration.

In a feasible embodiment, the method further includes:

calculating the driving style coefficient of the driver of the vehicle A according to a genetic algorithm when a manual driving instruction is received; and
storing the driving style coefficient of the driver of the vehicle A.

Specifically, the calculating the driving style coefficient of the driver of the vehicle A according to a genetic algorithm includes:

obtaining a value range of the driving style coefficient of the driver of the vehicle A;
randomly obtaining M groups of driving style coefficients from the value range of the driving style coefficient;
calculating the M groups of driving style coefficients according to the genetic algorithm to obtain M predicted driving tracks, where the M predicted driving tracks are in a one-to-one correspondence with the M groups of driving style coefficients;
obtaining an actual driving track of the vehicle A; and
comparing each of the M predicted driving tracks with the actual driving track to obtain the driving style coefficient of the driver of the vehicle A, where the driving style coefficient of the driver of the vehicle A is a driving style coefficient corresponding to a predicted driving track that is most similar to the actual driving track in the M predicted driving tracks.

It should be noted that, for a manner in which the driving track obtaining apparatus obtains the driving style coefficient of the driver of the vehicle A, refer to related description of the foregoing method. Details are not described herein again.

It can be learned that, in the solution in this embodiment of the present invention, when receiving the automatic driving instruction, the driving track obtaining apparatus identifies the identity of the driver of the vehicle A; obtains the driving style coefficient of the vehicle A based on the identity of the driver of the vehicle A; obtains the cost function of the driver of the vehicle A through calculation based on the driving style coefficient of the driver of the vehicle A; and obtains the driving track of the vehicle A on the first three-dimensional spatial-temporal map according to the cost function of the driver. In a process of determining the driving track of the vehicle A, both the driving style of the driver of the surrounding vehicle of the vehicle A and the predicted driving track of the surrounding vehicle of the vehicle A are considered, and the driving style of the driver of the vehicle A is also considered. Therefore, the driving track obtained by using the solutions in the embodiments of the present invention can match driving styles of all drivers. In addition, the driving track obtaining apparatus can adjust the driving style coefficient of the driver by using the operation information and the surrounding vehicle information obtained when the driver takes over the vehicle A, to adjust the driving track and finally lessen a running-in period in which the driver performs automatic driving.

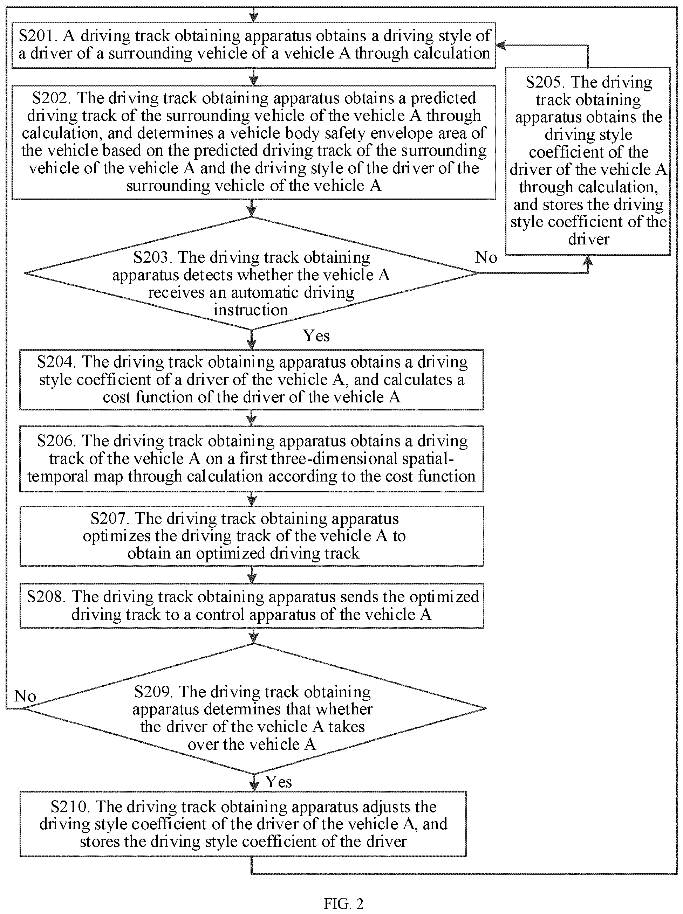

FIG. 2 is a schematic flowchart of another automatic driving track obtaining method according to an embodiment of the present invention. As shown in FIG. 2, the method includes:

S201. A driving track obtaining apparatus obtains a driving style of a driver of a surrounding vehicle of a vehicle A through calculation.

It should be noted that the surrounding vehicle of the vehicle A is a vehicle within a detection distance of a sensor of the vehicle A. A velocity sensor, an acceleration sensor, and a yaw angle sensor of the driving track obtaining apparatus collect a velocity, an acceleration, and a yaw angle of the surrounding vehicle of the vehicle A in real time. Alternatively, a velocity sensor, an acceleration sensor, and a yaw angle sensor of the surrounding vehicle of the vehicle A collect a velocity, an acceleration, and a yaw angle of the surrounding vehicle of the vehicle A in real time. Then the velocity, the acceleration, and the yaw angle of the surrounding vehicle of the vehicle A is transmitted to the vehicle A by using a communications network that includes the vehicle A and the surrounding vehicle of the vehicle A.

The foregoing driving styles include a lateral driving style and a longitudinal driving style. The lateral driving style includes an aggressive driving style, a conservative driving style, and a normal driving style. Similarly, the foregoing longitudinal driving style includes an aggressive driving style, a conservative driving style, and a normal driving style.

The driving track obtaining apparatus calculates the driving style of the driver of the surrounding vehicle of the vehicle A based on the velocity and the acceleration of the vehicle A.

Specifically, the driving track obtaining apparatus obtains the velocity and the acceleration of the surrounding vehicle of the vehicle A according to the foregoing method. The driving track obtaining apparatus obtains, through offline training based on the velocity and the acceleration of the surrounding vehicle, a lateral aggressive driving model M1, a lateral normal driving model M2, a lateral conservative driving model M3, a longitudinal aggressive driving model M4, a longitudinal normal driving model M5, and a longitudinal conservative driving model M6.

The driving track obtaining apparatus obtains N groups of velocities and accelerations of the surrounding vehicle of the vehicle A according to the foregoing method. The velocity includes a lateral velocity and a longitudinal velocity, and the acceleration includes a lateral acceleration and a longitudinal acceleration. The driving track obtaining apparatus inputs any one of the N groups of lateral velocities and lateral accelerations of the vehicle A into the lateral aggressive driving model M1, the lateral normal driving model M2, and the lateral conservative driving model M3, to obtain three first probabilities. The driving track obtaining apparatus obtains a first lateral driving style based on the three first probabilities. The first lateral driving style is a driving style corresponding to a driving model corresponding to a largest probability in the three first probabilities. According to the method, the driving track obtaining apparatus obtains N first lateral driving styles, and performs average filtering on the N first lateral driving styles, to obtain a lateral driving style of the surrounding vehicle of the vehicle A. Similarly, the driving track obtaining apparatus inputs any one of the N groups of longitudinal velocities and longitudinal accelerations of the vehicle A into the longitudinal aggressive driving model M4, the longitudinal normal driving model M5, and the longitudinal conservative driving model M6, to obtain three second probabilities. The driving track obtaining apparatus obtains a first longitudinal driving style based on the three second probabilities. The first longitudinal driving style is a driving style corresponding to a driving model corresponding to a largest probability in the three second probabilities. According to the method, the driving track obtaining apparatus obtains N first longitudinal driving styles, and performs average filtering on the N first longitudinal driving styles, to obtain a longitudinal driving style of the surrounding vehicle of the vehicle A.

S202. The driving track obtaining apparatus obtains a predicted driving track of the surrounding vehicle of the vehicle A through calculation, and determines a vehicle body safety envelope area of the vehicle based on the predicted driving track of the surrounding vehicle of the vehicle A and the driving style of the driver of the surrounding vehicle of the vehicle A.

Specifically, the driving track obtaining apparatus obtains a lateral velocity, a lateral acceleration, a longitudinal velocity, a longitudinal acceleration, a yaw angle of the surrounding vehicle of the vehicle A, and the like according to the foregoing method. The driving track obtaining apparatus calculates the predicted driving track of the surrounding vehicle of the vehicle A based on the lateral velocity, the lateral acceleration, the longitudinal velocity, the longitudinal acceleration, the yaw angle of the surrounding vehicle of the vehicle A, and the like.

The predicted driving track of the surrounding vehicle of the vehicle A may be expressed as follows:

$$M_p = \left\{ x_i, y_i, \theta_i, t \mid F(x_i, y_i, \theta_i, t) = 0, t = \Delta t, 2\Delta t, \ldots, \ T\Delta t \right\} (i = 1, 2 \ldots, N)$$ ,

where
$N$ represents a quantity of surrounding vehicles of the vehicle A, $i$ represents an $i^{th}$ surrounding vehicle of the vehicle A, $x_i, y_i, \theta_i$ respectively represent a horizontal coordinate, a vertical coordinate, and a yaw angle of the $i^{th}$ surrounding vehicle, and $F(\cdot)$ represents the predicted driving track of the surrounding vehicle of the vehicle A at different moments.

Further, a vehicle A' is any one of surrounding vehicles of the vehicle A. The driving track obtaining apparatus generates a vehicle body safety envelope area of the vehicle A' based on a driving track of the vehicle A'.

The driving track obtaining apparatus adjusts the vehicle body safety envelope area of the vehicle A' based on a driving style of the vehicle A'. When a lateral driving style or a longitudinal driving style of the vehicle A' is aggressive, the driving track obtaining apparatus expands the vehicle body safety envelope area of the vehicle A'; or when a lateral driving style or a longitudinal driving style of the vehicle A' is conservative, the driving track obtaining apparatus narrows the vehicle body safety envelope area of the vehicle A'.

S203. The driving track obtaining apparatus detects whether the vehicle A receives an automatic driving instruction.

When detecting that the vehicle A does not receive the automatic driving instruction, the driving track obtaining apparatus performs step S204; or when detecting that the vehicle A receives the automatic driving instruction, the driving track obtaining apparatus performs step S205.

S204. The driving track obtaining apparatus obtains a driving style coefficient of a driver of the vehicle A, and calculates a cost function of the driver of the vehicle A.

The cost function is used to represent costs paid when the vehicle A travels from an initial node to a current node in a driving track of the vehicle A.

It should be noted that different drivers have different driving style coefficients.

Specifically, the driving track obtaining apparatus identifies and obtains an identity of the driver of the vehicle A, and traverses the server based on the identity of the driver. When the identity of the driver is traversed in the server, the driving track obtaining apparatus stores the driving style coefficient of the driver of the vehicle A in the server, to replace a stored driving style coefficient corresponding to the identity of the driver; or when the identity of the driver is not traversed in the server, the driving track obtaining apparatus adds the identity of the driver and a corresponding driving style coefficient to the server.

In a feasible embodiment, the driving track obtaining apparatus identifies and obtains an identity of the driver of the vehicle A, and traverses a storage device of the driving track obtaining apparatus based on the identity of the driver. When the identity of the driver is traversed in the storage device, the driving track obtaining apparatus stores the driving style coefficient of the driver of the vehicle A in the storage device of the driving track obtaining apparatus, to replace a stored driving style coefficient corresponding to the identity of the driver; or when the identity of the driver is not traversed in the server, the driving track obtaining apparatus adds the identity of the driver and a corresponding driving style coefficient to the storage device of the driving track obtaining apparatus.

In a feasible embodiment, the driving track obtaining apparatus may obtain an identity of the driver by using key id identification, facial identification, voiceprint identification, a humancomputer interaction interface, or the like, and obtain a corresponding driving style coefficient from the server according to the identity of the driver.

The cost function is a function constructed based on at least one of a safety item S, a comfort item C, a compliance item R, and an efficiency item T. The safety item S, the comfort item C, the compliance item R, and the efficiency item T are driving habit parameters of the driver of the vehicle A. The safety item S is used to represent a vehicle following habit of the vehicle A and a safe distance between the vehicle A and a surrounding obstacle. The comfort item C is used to represent a velocity change degree and an acceleration change degree of the vehicle A. The compliance item R is used to represent whether the vehicle A complies with traffic regulations. The efficiency item T is used to represent a destination arrival time, braking and steering priorities for obstacle avoidance, and overtaking behavior and yielding behavior generated in a process in which the vehicle A and a surrounding vehicle of the vehicle A travel.

Optionally, the cost function may be represented as follows:

$$G = w_1 S + w_2 C + w_3 R + w_4 T ,$$

where

$w_1$, $w_2$, $W_3$, and $w_4$ are driving style coefficients of the driver of the vehicle A.

The safety item S is determined based on a longitudinal distance between the vehicle A and a front vehicle of the vehicle A, a difference between a longitudinal velocity of the vehicle A and a longitudinal velocity of the front vehicle of the vehicle A, and a lateral distance between the vehicle A and a left/right adjacent vehicle of the vehicle A. The comfort item C is determined based on a difference between an actual velocity of the vehicle A and a desired velocity of the vehicle A, and a difference between an actual acceleration of the vehicle A and a desired acceleration of the vehicle A. The compliance item R is determined based on a difference between a horizontal coordinate of a location of the vehicle A that is desired by the vehicle A and a horizontal coordinate of a lane centerline of a lane on which the vehicle A is located, a difference between a vertical coordinate of the location of the vehicle A that is desired by the vehicle A and a vertical coordinate of the lane centerline of the lane on which the vehicle A is located, and a difference between the desired velocity of the vehicle A and a maximum limit velocity of the lane on which the vehicle A is located. The efficiency item T is determined based on a difference between a horizontal coordinate of a current location of the vehicle A and the horizontal coordinate of the desired location of the vehicle A, and a difference between a vertical coordinate of the current location of the vehicle A and the vertical coordinate of the desired location of the vehicle A.

In a feasible embodiment, the safety item S, the comfort item C, the compliance item R, and the efficiency item T are respectively represented as follows:

$$S = \frac{c_3}{(\frac{\Delta d}{\Delta v + c_1} - c_2)^p} + c_4 \Delta l ,$$

$$C = (\Delta V)^2 + (\Delta A)^2 ,$$

$$R = (X_{desired} - X_{centerline})^2 + (Y_{desired} - Y_{centerline})^2 + (V_{desired} - V_{limit})^2 ,$$

and

$$T = \left( X_{desired} - X_{current} \right)^2 + \left( Y_{desired} - Y_{current} \right)^2 ,$$

where

$c_1$, $c_2$, $c_3$, $c_4$, and $p$ are constants, $\Delta d$ is the longitudinal distance between the vehicle A and the front vehicle of the vehicle A, $\Delta l$ is the lateral distance between the vehicle A and the left/right adjacent vehicle of the vehicle A, $\Delta v$ is the difference between the longitudinal velocity of the vehicle A and the longitudinal velocity of the front vehicle of the vehicle A, $\Delta V$ is the difference between the actual velocity of the vehicle A and the desired velocity of the vehicle A, $\Delta A$ is the difference between the actual acceleration of the vehicle A and the desired acceleration of the vehicle A, $X_{desired}$ and $Y_{desired}$ are respectively the horizontal coordinate and the vertical coordinate of the desired location of the vehicle A, $X_{centerline}$ and $Y_{centerline}$ are respectively the horizontal coordinate and the vertical coordinate of the lane centerline of the lane on which the vehicle A is located, $V_{limit}$ is the maximum limit velocity of the lane on which the vehicle A is located, $V_{desired}$ is the desired velocity of the vehicle A, and $X_{current}$ and $Y_{current}$ are respectively the horizontal coordinate and the vertical coordinate of the current location of the vehicle A.

The safety item S, the comfort item C, the compliance item R, and the efficiency item T may be calculated according to representation manners of the safety item S, the comfort item C, the compliance item R, and the efficiency item T. The cost function, namely, $G = w_1S + w_2C + w_3R + w_4T$, of the driver may be determined based on the driving style coefficient of the driver.

S205. The driving track obtaining apparatus obtains the driving style coefficient of the driver of the vehicle A through calculation, and stores the driving style coefficient of the driver.

The driving track obtaining apparatus separately obtains value ranges of $w_1$, $w_2$, $W_3$, and $w_4$. The value ranges of $w_1$, $w_2$, $W_3$, and $w_4$ are randomly generated.

In a feasible embodiment, the value ranges of $w_1$, $w_2$, $W_3$, and $w_4$ are all (0, 1), in other words, $w_1$, $w_2$, $W_3$, and $w_4$ are all greater than 0 and less than 1.

Specifically, the driving track obtaining apparatus randomly generates a parent group of the genetic algorithm based on the foregoing M groups of $w_1$, $w_2$, $W_3$, and $w_4$, and sets a related parameter of the genetic algorithm. The driving track obtaining apparatus separately performs a cross operation and a variation operation on the foregoing M groups of $w_1$, $w_2$, $W_3$, and $w_4$ based on the parent group of the genetic algorithm and the specified related parameter of the genetic algorithm, to obtain M predicted driving tracks. The M predicted driving tracks are in a one-to-one correspondence with the foregoing M groups of $w_1$, $w_2$, $W_3$, and $w_4$. The driving track obtaining apparatus collects an actual driving track of the vehicle A, and obtains a similarity between each of the M driving tracks and the actual driving track. The driving track obtaining apparatus obtains a group of $w_1$, $w_2$, $W_3$, and $w_4$ corresponding to a driving track that is most similar to the actual driving track, and uses the group of $w_1$, $w_2$, $W_3$, and $w_4$ as a second driving style coefficient.

In a feasible embodiment, after obtaining the driving style coefficient of the driver of the vehicle A, the driving track obtaining apparatus stores the driving style coefficient and the identity of the driver of the vehicle A in the storage device of the driving track obtaining apparatus or in the server.

S206. The driving track obtaining apparatus obtains the driving track of the vehicle A on a first three-dimensional spatial-temporal map through calculation according to the cost function.

Specifically, the driving track obtaining apparatus extends a two-dimensional spatial map to a second three-dimensional spatial-temporal map including information about a drivable road area. The second three-dimensional spatial-temporal map includes information about a drivable area of the vehicle A. The driving track obtaining apparatus removes a dynamic obstacle area of the vehicle A from the second three-dimensional spatial-temporal map based on the vehicle body safety envelope area of the surrounding vehicle, to generate the first three-dimensional spatial-temporal map.

It should be noted that the dynamic obstacle area of the vehicle A is the vehicle body safety envelope area of the surrounding vehicle of the vehicle A.

The two-dimensional spatial map may be represented as follows:

$$Map = \left\{ (x, y) \mid x \in R_x, y \in R_y \right\} ,$$

where

$(x, y)$ are two-dimensional plane coordinates; and $R_x$ and $R_y$ respectively are definition areas of a horizontal coordinate $x$ and a vertical coordinate .

The first three-dimensional spatial-temporal map may be represented as follows:

$$3DMap = \{(x, y, t) | L(x) \leq y \leq U(x), x \in R_x, t = 0, \Delta t, 2\Delta t, \ldots, T\Delta t\}$$

,

where

$(x, y, t)$ are spatial-temporal coordinates in a Cartesian coordinate system, and represent corresponding location coordinates of the vehicle A at a moment t; $R_x$ is a definition area corresponding to a horizontal coordinate $x$; $L(\cdot), U(\cdot)$ is an upper/lower boundary value function in which a coordinate y changes with x, and represent a drivable area to the vehicle A limited according to a road geometric limit; $\Delta t$ is a system time step, and represents that time density of track planning is consistent with a system running frequency; and a positive integer T represents a time range of track planning, in other words, a maximum limit quantity of time steps at which the vehicle A motions in each track planning.

It should be noted that, because of a forward passage of time, from a perspective of a time axis, a relationship between spatial coordinates at two adjacent time points exists only in evolution from a spatial coordinate at an early time to a spatial coordinate at a later time. There is no evolution relationship in an opposite direction. Therefore, a directional correspondence may be established between each spatial point on each spatial layer map and each spatial point on a next spatial layer map that are on a three-dimensional spatial map. In this way, a basic feature of a directed acyclic graph is constructed.

A series of nodes are included in the driving track of the driving track obtaining apparatus on the second three-dimensional spatial-temporal maps.

Location information of a node in the driving track of the vehicle A is calculated to obtain the driving track of the vehicle A. Location information of a second node that is adjacent to a first node in the driving track of the vehicle A and that is after the first node is calculated based on location information of the first node by using the following method:

obtaining location information of $N_A*N_\Theta$ candidate nodes through calculation based on the location information of the first node, an acceleration change set A of the vehicle A, and a yaw angle change set $\Theta$ of the vehicle A, where $N_A$ is a quantity of elements in the yaw angle change set A, and $N_\Theta$ is a quantity of elements in the acceleration change set $\Theta$; and

evaluating location information of each candidate node in the location information of the $N_A*N_\Theta$ candidate nodes according to a heuristic function and the cost function to obtain the location information of the second node, where the location information of the second node is location information of a node with a smallest evaluation value in the location information of the $N_A*N_\Theta$ candidate nodes, and the heuristic function is used to represent costs that need to be paid when the vehicle A travels from the first node to a target point in the track of the vehicle A.

Herein, $\Delta t$ is an interval between two temporally adjacent nodes in the driving track of the vehicle A, $(X_t, Y_t, V_t, \theta_t)$ is the location information of the first node, $X_t, Y_t, V_t, \theta_t$ are respectively a horizontal coordinate, a vertical coordinate, a linear velocity, and a yaw angle of the vehicle A on the first three-dimensional spatial-temporal map at a moment t, and

$\left(X_{t+\Delta t}^k, Y_{t+\Delta t}^k, V_{t+\Delta t}^k, \theta_{t+\Delta t}^k\right)$ is location information of a k$^{th}$ candidate node in the $N_A*N_\Theta$ candidate nodes and is calculated by the driving track obtaining apparatus based on the location information of the first node, the acceleration change set A of the vehicle A, and the yaw angle change set $\Theta$ of the vehicle A.

Herein, $X_{t+\Delta t}^k, Y_{t+\Delta t}^k, V_{t+\Delta t}^k, \theta_{t+\Delta t}^k$ are respectively a horizontal coordinate, a vertical coordinate, a linear velocity, and a yaw angle of the k$^{th}$ candidate node,

$X_{t+\Delta t}^k = X_t + V_{t+\Delta t}^k * \Delta t * \cos\theta_{t+\Delta t}$, $Y_{t+\Delta t}^k = Y_t + V_{t+\Delta t}^k * \Delta t * \sin\theta_{t+\Delta t}$, $V_{t+\Delta t}^k = V_t + a_{t+\Delta t} * \Delta t$

,

$\theta_{t+\Delta t}^k = \theta_t + \theta$, $a_{t+\Delta t}^k = a_t + a$, $\theta$ is any element in the yaw angle change space A, and $a$ is any element in the acceleration change space $\Theta$.

In a specific application scenario, the acceleration change set and the yaw angle change set of the vehicle A may be represented as follows:

$$A = \{a_{dec}, 0.5a_{dec}, 0, 0.5a_{acc}, a_{acc}\}$$

and

$$\Theta = \{\pm\theta', \pm 0.5\theta', 0\}\text{,}$$

where

$a_{dec}$, $a_{acc}$, $\theta'$ are all constants, a quantity of elements in the set A (in other words, the acceleration change set) is 5, and a quantity of elements in the set $\Theta$ (in other words, the yaw angle change set) is 5.

The driving track obtaining apparatus obtains location information of the $N_A{}^*N_\Theta$ candidate nodes of the vehicle at a moment $t + \Delta t$ based on a node $Node_t$ of the vehicle A at the moment t, the acceleration change set, and the yaw angle change set. For example, when both the yaw angle change set and the acceleration change set include five elements, a quantity of the candidate coordinate nodes is 25. The location information of the $k^{th}$ candidate node in the $N_A{}^*N_\Theta$ candidate coordinate nodes may be expressed as follows:

$$Node_{t+\Delta t}^k = (X_{t+\Delta t}^k, Y_{t+\Delta t}^k, V_{t+\Delta t}^k, \theta_{t+\Delta t}^k)\text{,}$$

$$\theta_{t+\Delta t}^k = \theta_t + \theta\text{,}$$

$$a_{t+\Delta t}^k = a_t + a\text{,}$$

$$V_{t+\Delta t}^k = V_t + a_{t+\Delta t}^k * \Delta t\text{,}$$

$$X_{t+\Delta t}^k = X_t + V_{t+\Delta t}^k * \Delta t * \cos\theta_{t+\Delta t}\text{,}$$

and

$$Y_{t+\Delta t}^k = Y_t + V_{t+\Delta t}^k * \Delta t * \sin\theta_{t+\Delta t}\text{,}$$

where

$$a \in A, \quad \theta \in \Theta, \text{ and } \quad k \in \{1, 2, \ldots, N_A * N_\Theta\}.$$

According to the foregoing method, after the driving track obtaining apparatus obtains the location information of the $N_A{}^*N_\Theta$ candidate nodes, the driving track obtaining apparatus evaluates the location information of each of the $N_A{}^*N_\Theta$ candidate nodes according to the cost function and the heuristic function, to obtain $N_A{}^*N_\Theta$ evaluation values. The driving track obtaining apparatus uses location information of a candidate node corresponding to a smallest evaluation value in the $N_A{}^*N_\Theta$ evaluation values as location information of a node $Node_{t+\Delta t}$ of the vehicle A at the moment $t + \Delta t$. Specifically, that the driving track obtaining apparatus evaluates the $k^{th}$ candidate coordinate node in the $N_A{}^*N_\Theta$ candidate nodes according to the cost function and the heuristic function is specifically:

$$F_k = G_k + H_k\text{,}$$

$$H_k = (X_{t+\Delta t}^k - X_{target})^2 + (Y_{t+\Delta t}^k - Y_{target})^2\text{,}$$

and

$$G = w_1 S_k + w_2 C_k + w_3 R_k + w_4 T_k,$$

where

$F_k$ is an evaluation function; $H_k$ is a heuristic function; $X_{target}$ and $Y_{target}$ are a horizontal coordinate and a vertical coordinate of a terminate node in a driving track; and $G_k$ is a cost function.

The driving track obtaining apparatus determines whether the second node $Node_{t+\Delta t}$ is a terminate node in the driving track of the vehicle A. When the second node $Node_{t+\Delta t}$ is not the terminate node in the driving track of the vehicle A, the driving track obtaining apparatus obtains a node, in other words, $Node_{t+2\Delta t}$ of the vehicle A at a moment $t + 2\Delta t$ according to the foregoing method. When the second node $Node_{t+\Delta t}$ is the terminate node in the driving track of the vehicle A, the driving track obtaining apparatus stops the foregoing operation. Therefore, the driving track obtaining apparatus obtains the driving track of the vehicle A, and then the driving track obtaining apparatus performs step S207.

S207. The driving track obtaining apparatus optimizes the driving track of the vehicle A to obtain an optimized driving track.

Specifically, the driving track obtaining apparatus establishes a kinematic model of the vehicle A by using a front wheel of the vehicle A as an object.

Herein, $X = (x_f, yf, \theta, \delta, v_f)$ is used as a system status, and $U = (\dot{\delta}, \dot{v_f})^T$ is used as a system input, where $v_f$ is a linear velocity of the front wheel of the vehicle A, $\theta$ is the yaw angle of the vehicle A, $\delta$ is a steering angle of the front wheel of the vehicle A, and $\dot{\delta}$ is an angular velocity of a front wheel steering angle of the vehicle A.

The driving track obtaining apparatus establishes, based on the kinematic model of the vehicle A, model predictive control to resolve an optimization problem:

$$J(x) = w_1 * \left\| X - X^r \right\|_Q^2 + w_2 \left\| U \right\|_R^2,$$

$$X_0 = X^{start}, X_N = X^{target},$$

$$\dot{X} = F(X, U),$$

$$U_{\min} \leq U \leq U_{\max},$$

and

$$\phi_n(X) \geq 0, \forall n = 1, 2, \ldots, N-1,$$

where

$w_1$ and $w_2$ are coefficients; $X^r$ is a preset reference track; Q and R are linear quadratic parameters; $X^{start}$ and $X^{target}$ are respectively state constraints of a start point and an end point of the driving track; $U_{\min}$ and $U_{\max}$ are respectively an upper bound and a lower bound of a system input; and $\phi_n(\cdot)$ is a state constraint corresponding to each point in the driving track.

The driving track obtaining apparatus uses a convex feasible region construction method to resolve a problem that a conventional solution optimization problem is time-consuming and inaccurate, so as to improve solvability and effectiveness. A key to resolve the problem is an iteration. During a $k^{th}$ iteration, a corresponding convex feasible region $F(X_{(k)}) \subset \Gamma$ is calculated for a specific reference track $X_{(k)}^r$. The driving track obtaining apparatus resolves the following convex optimization problem by using a model predictive control method, to obtain a new reference track.

$$X_{(k+1)} = \arg \min_{X \in F(X_{(k)})} J(X)$$

The iteration ends when the new reference track converges or a gradient of the target function is small enough. In this case, the optimized driving track in consideration of the vehicle dynamics may be obtained.

S208. The driving track obtaining apparatus sends the optimized driving track to a control apparatus of the vehicle A.

Specifically, after the driving track obtaining apparatus sends the optimized driving track to the control apparatus of the vehicle A, the control apparatus converts the driving track into a driving instruction executable for the control apparatus, and the control apparatus drives the vehicle A based on the driving instruction.

S209. The driving track obtaining apparatus determines that whether the driver of the vehicle A takes over the vehicle A.

When determining that the driver of the vehicle A takes over the vehicle A, the driving track obtaining apparatus performs step S210, or when determining that the driver of the vehicle A does not take over the vehicle A, the driving track obtaining apparatus performs step S201.

It should be noted that, the driving track obtaining apparatus monitors and determines in real time whether the driver of the vehicle A takes over the vehicle A.

S210. The driving track obtaining apparatus adjusts the driving style coefficient of the driver of the vehicle A, and stores the driving style coefficient of the driver.

Specifically, operation information of the driver of the vehicle A includes: accelerating without steering, steering with accelerating, constant-velocity driving without steering, steering with a constant-velocity, decelerating without steering, steering with decelerating, and the like. The surrounding vehicle information includes that there is a vehicle around the vehicle A and there is no vehicle around the vehicle A.

For a specific manner in which the driving track obtaining apparatus adjusts the driving style coefficient based on the operation information of the driver of the vehicle A and the surrounding vehicle information, refer to Table 1.

As shown in Table 1, the driving track obtaining apparatus decreases the coefficient $w_1$ of the safety item S when there is a vehicle around the vehicle A and when it is determined that the vehicle A accelerates without steering. Specifically, for example, the coefficient $w_1$ of the safety item S, the coefficient $w_2$ of the comfort item C, the coefficient $W_3$ of the compliance item T, and the coefficient $w_4$ of the efficiency item T each correspond to a value range (0, 1). The driving track obtaining apparatus may decrease the value range of the coefficient $w_1$ of the safety item S to (0, 0.5) or (0, 0.6), and does not change the value range corresponding to each of the coefficient $w_2$ of the comfort item C, the coefficient $W_3$ of the compliance item T, and the coefficient $w_4$ of the efficiency item T.

The driving track obtaining apparatus obtains M groups of $w_1$, $w_2$, $W_3$, and $w_4$ from the value ranges corresponding to $w_1$, $w_2$, $W_3$, and $w_4$, in other words, the driving track obtaining apparatus separately obtains M values from the value ranges corresponding to $w_1$, $w_2$, $W_3$, and $w_4$, where M is an integer greater than 1. The driving track obtaining apparatus processes the M groups of $w_1$, $w_2$, $W_3$, and $w_4$ according to the genetic algorithm to obtain M predicted driving tracks.

Specifically, the driving track obtaining apparatus randomly generates a parent group of the genetic algorithm based on the foregoing M groups of $w_1$, $w_2$, $W_3$, and $w_4$, and sets a related parameter of the genetic algorithm. The driving track obtaining apparatus separately performs a cross operation and a variation operation on the foregoing M groups of $w_1$, $w_2$, $W_3$, and $w_4$ based on the parent group of the genetic algorithm and the specified related parameter of the genetic algorithm, to obtain the M predicted driving tracks. The M predicted driving tracks are in a one-to-one correspondence with the foregoing M groups of $w_1$, $w_2$, $W_3$, and $w_4$. The driving track obtaining apparatus collects an actual driving track of the vehicle A, and obtains a similarity between each of the M driving tracks and the actual driving track. The driving track obtaining apparatus obtains a group of $w_1$, $w_2$, $W_3$, and $w_4$ corresponding to a driving track that is most similar to the actual driving track, and uses the group of $w_1$, $w_2$, $W_3$, and $w_4$ as a second driving style coefficient. The driving track obtaining apparatus stores the second driving style coefficient in the driving track obtaining apparatus or in the server, to replace a first driving style coefficient. The first driver style coefficient is a driving style coefficient that is of the driver of the vehicle A and that is stored in the storage device of the driving track obtaining apparatus or in the server.

That the driving track obtaining apparatus increases or decreases the coefficient of the safety item S and the coefficient of the efficiency item T when there is a vehicle around the vehicle A and when it is determined that the vehicle A steers with acceleration or steers with deceleration includes: The driving track obtaining apparatus increases or decreases the value range of the coefficient $w_1$ of the safety item S and the value range of the coefficient $w_4$ of the efficiency item T, and does not change the value range of the coefficient $w_2$ of the comfort item C and the value range of the coefficient $W_3$ of the compliance item R. For example, the coefficient $w_1$ of the safety item, the coefficient $w_2$ of the comfort item C, the coefficient $W_3$ of the compliance item T, and the coefficient $w_4$ of the efficiency item T each correspond to a value range (0, 1). The driving track obtaining apparatus respectively increases a value range of the

coefficient $w_1$ of the safety item S and a value range of the coefficient $w_4$ of the efficiency item T to (1, 1.5) and (1, 2); or the driving track obtaining apparatus respectively decreases a value range of the coefficient $w_1$ of the safety item S and a value range of the coefficient $w_4$ of the efficiency item T to (0, 0.2) and (0, 0.1). Then, the driving track obtaining apparatus calculates the second driving style parameter according to the foregoing method, and stores the second driving style coefficient in the storage device of the driving track obtaining apparatus or in the server, to replace the first driving style coefficient.

Specifically, when the driver of the vehicle A takes over the vehicle A this time, and when there is a vehicle around the vehicle A and the vehicle A steers with acceleration or steers with deceleration, the driving track obtaining apparatus performs a first operation on the value range of the coefficient $w_1$ of the safety item S and the value range of the coefficient $w_4$ of the efficiency item T, and does not change the value range of the coefficient $w_2$ of the comfort item C and the value range of the coefficient $W_3$ of the compliance item R. The first operation includes increasing or decreasing the value range of the coefficient $w_1$ of the safety item S and the value range of the coefficient $w_4$ of the efficiency item T. The driving track obtaining apparatus obtains the second driving style coefficient according to the foregoing method, and stores the second driving style coefficient in the storage device of the driving track obtaining apparatus or in the server, to replace the first driving style coefficient. When the driver of the vehicle A takes over the vehicle A next time, and when there is a vehicle around the vehicle A and the vehicle A steers with acceleration or steers with deceleration, the driving track obtaining apparatus performs a second operation on the value range of the coefficient $w_1$ of the safety item S and the value range of the coefficient $w_4$ of the efficiency item T, and does not change the value range of the coefficient $w_2$ of the comfort item C and the value range of the coefficient $W_3$ of the compliance item R. The second operation includes increasing or decreasing the value range of the coefficient $w_1$ of the safety item S and the value range of the coefficient $w_4$ of the efficiency item T. The first operation is inconsistent with the second operation. The driving track obtaining apparatus obtains the second driving style coefficient according to the foregoing method, and stores the second driving style coefficient in the storage device of the driving track obtaining apparatus or in the server, to replace the first driving style coefficient.

The driving track obtaining apparatus increases or decreases the coefficient $w_1$ of the safety item S when there is a vehicle around the vehicle A and when it is determined that the vehicle A steers with a constant-velocity. Specifically, the driving track obtaining apparatus increases or decreases the value range of the coefficient $w_1$ of the safety item S, and does not change the value range corresponding to each of the coefficient $w_2$ of the comfort item C, the coefficient $W_3$ of the compliance item R, and the coefficient $w_4$ of the efficiency item T. Then, the driving track obtaining apparatus obtains the second driving style parameter according to the foregoing method, and stores the second driving style coefficient in the storage device of the driving track obtaining apparatus or in the server, to replace the first driving style coefficient.

Specifically, when the driver of the vehicle A takes over the vehicle A this time, and when there is a vehicle around the vehicle A and the vehicle A steers with a constant-velocity, the driving track obtaining apparatus performs a first operation on the value range of the coefficient $w_1$ of the safety item S, and does not change the value range of each of the coefficient $w_2$ of the comfort item C, the coefficient $W_3$ of the compliance item R, and the coefficient $w_4$ of the efficiency item T. The first operation includes increasing or decreasing the value range of the coefficient $w_1$ of the safety item S. The driving track obtaining apparatus obtains the second driving style coefficient according to the foregoing method, and stores the second driving style coefficient in the storage device of the driving track obtaining apparatus or in the server, to replace the first driving style coefficient. When the driver of the vehicle A takes over the vehicle A next time, and when there is a vehicle around the vehicle A and the vehicle A steers with a constant-velocity, the driving track obtaining apparatus performs a second operation on the value range of the coefficient $w_1$ of the safety item S, and does not change the value range of each of the coefficient $w_2$ of the comfort item C, the coefficient $W_3$ of the compliance item R, and the coefficient $w_4$ of the efficiency item T. The second operation includes increasing or decreasing the value range of the coefficient $w_1$ of the safety item S. The first operation is inconsistent with the second operation. The driving track obtaining apparatus obtains the second driving style coefficient according to the foregoing method, and stores the second driving style coefficient in the storage device of the driving track obtaining apparatus or in the server, to replace the first driving style coefficient.

The driving track obtaining apparatus increases the coefficient of the safety item T when there is a vehicle around the vehicle A and when it is determined that the vehicle A decelerates without steering. Specifically, the driving track obtaining apparatus increases the value range of the coefficient $w_1$ of the safety item T, and does not change the value range corresponding to each of the coefficient $w_2$ of the comfort item C, the coefficient $W_3$ of the compliance item R, and the coefficient $w_4$ of the efficiency item T. Then, the driving track obtaining apparatus obtains the second driving style parameter according to the foregoing method, and stores the second driving style coefficient in the storage device of the driving track obtaining apparatus or in the server, to replace the first driving style coefficient.

The driving track obtaining apparatus does not adjust the driving style parameter of the driver when there is a vehicle around the vehicle A and when it is determined that the vehicle A drives at a constant velocity without steering.

When there is no vehicle around the vehicle A, and it is determined that the vehicle A accelerates without steering or decelerates without steering, the driving track obtaining apparatus increases the coefficient of the comfort item C and the coefficient of the efficiency item T. Specifically, the driving track obtaining apparatus increases the value ranges corresponding to the coefficient $w_2$ of the comfort item C and the coefficient $w_4$ of the efficiency item T, and does not change the value ranges corresponding to the coefficient $w_1$ of the safety item T and the coefficient $W_3$ of the compliance item S. Then, the driving track obtaining apparatus obtains the second driving style coefficient according to the foregoing method, and stores the second driving style coefficient in the storage device of the driving track obtaining apparatus or in the server, to replace the first driving style coefficient. When it is determined that the vehicle A steers with acceleration, drives at a constant velocity without steering, steers with a constant-velocity, or steers with deceleration, the driving track obtaining apparatus does not adjust the driving style parameter of the driver of the vehicle A.

It can be learned that in the solution in this embodiment of the present invention, in a process of determining the driving track of the vehicle A, both the driving style of the driver of the surrounding vehicle of the vehicle A and the predicted driving track of the surrounding vehicle of the vehicle A are considered, and the driving style of the vehicle A is also considered. Therefore, the driving track obtained by using the solutions in the embodiments of the present invention can match driving styles of all drivers. In addition, the driving track obtaining apparatus can adjust the driving style coefficient by using the operation information obtained when the driver takes over the vehicle A, to further adjust the driving track, so that the driving track can match the driving styles of all the drivers. This increases a degree at which the driver is satisfied with the driving track, and finally can lessen a running-in period in which the driver performs automatic driving.

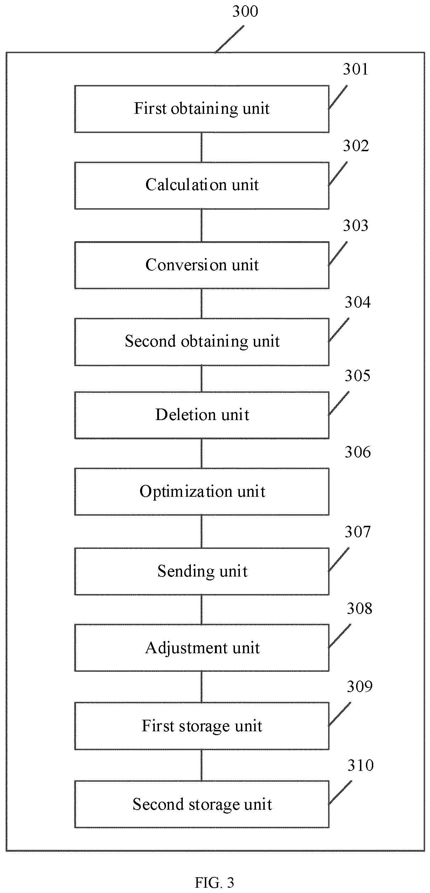

FIG. 3 is a schematic structural diagram of an automatic driving track obtaining apparatus according to an embodiment of the present invention. As shown in FIG. 3, the automatic driving track obtaining apparatus 300 includes:

> a first obtaining unit 301, configured to obtain a driving style coefficient of a driver of the vehicle A, where the first obtaining unit 301 includes:

>> an identification subunit 3011, configured to identify an identity of the driver of the vehicle A when an automatic driving instruction is received; and
>> an obtaining subunit 3012, configured to obtain the driving style coefficient of the driver of the vehicle A based on the identity of the driver of the vehicle A; and
>> a calculation unit 302, configured to obtain a cost function of the driver of the vehicle A through calculation based on the driving style coefficient of the driver of the vehicle A, where the cost function is used to represent costs paid when the vehicle A travels from an initial node to a current node in a driving track of the vehicle A; and
>> the calculation unit 302 is configured to obtain the driving track of the vehicle A on a first three-dimensional spatial-temporal map through calculation according to the cost function of the driver.

Specifically, the calculation unit 302 is specifically configured to:
calculate location information of a node in the driving track of the vehicle A to obtain the driving track of the vehicle A, where location information of a second node that is adjacent to a first node in the driving track of the vehicle A and that is after the first node is calculated based on location information of the first node by using the following method:

> obtaining location information of $N_A*N_\Theta$ candidate nodes through calculation based on the location information of the first node, an acceleration change set A of the vehicle A, and a yaw angle change set $\Theta$ of the vehicle A, where $N_A$ is a quantity of elements in the yaw angle change set A, $N_\Theta$ is a quantity of elements in the acceleration change set $\Theta$, and both $N_A$ and $N_\Theta$ are integers greater than 1; and
> evaluating location information of each candidate node in the location information of the $N_A*N_\Theta$ candidate nodes according to a heuristic function and the cost function to obtain the location information of the second node, where the location information of the second node is location information of a node with a smallest evaluation value in the location information of the $N_A*N_\Theta$ candidate nodes, and the heuristic function is used to represent costs that need to be paid when the vehicle A travels from the first node to a target point in the track of the vehicle A.

Further, $\Delta t$ is an interval between two temporally adjacent nodes in the driving track of the vehicle A, $(X_t, Y_t, V_t, \theta_t)$ is the location information of the first node, $X_t, Y_t, V_t, \theta_t$ are respectively a horizontal coordinate, a vertical coordinate, a linear velocity, and a yaw angle of the vehicle A on the first three-dimensional spatial-temporal map at a moment t, and

$$(X_{t+\Delta t}^k, Y_{t+\Delta t}^k, V_{t+\Delta t}^k, \theta_{t+\Delta t}^k)$$ is location information of a $k^{th}$ candidate node in the $N_A*N_\Theta$ candidate nodes and is calculated by the calculation unit 302 based on the location information of the first node, the acceleration change set A of the vehicle A, and the yaw angle change set $\Theta$ of the vehicle A; and $X_{t+\Delta t}^{k}, Y_{t+\Delta t}^{k}, V_{t+\Delta t}^{k}, \theta_{t+\Delta t}^{k}$ are respectively a horizontal coordinate, a vertical coordinate, a linear velocity, and a yaw angle of the $k^{th}$ candidate node,

$$X_{t+\Delta t}^{k} = X_t + V_{t+\Delta t}^{k} * \Delta t * \cos \theta_{t+\Delta t} \quad,$$

$$Y_{t+\Delta t}^{k} = Y_t + V_{t+\Delta t}^{k} * \Delta t * \sin \theta_{t+\Delta t} \quad, \quad V_{t+\Delta t}^{k} = V_t + a_{t+\Delta t} * \Delta t \quad, \quad \theta_{t+\Delta t}^{k} = \theta_t + \theta \quad, \quad a_{t+\Delta t}^{k} = a_t + a \quad, \quad \theta \text{ is any element}$$

in the yaw angle change space A, and $a$ is any element in the acceleration change space $\Theta$.

Optionally, the cost function is a function constructed based on at least one of a safety item S, a comfort item C, a compliance item R, and an efficiency item T. The safety item S, the comfort item C, the compliance item R, and the efficiency item T are driving habit parameters of the driver of the vehicle A. The safety item S is used to represent a vehicle following habit of the vehicle A and a safe distance between the vehicle A and a surrounding obstacle. The comfort item C is used to represent a velocity change degree and an acceleration change degree of the vehicle A. The compliance item R is used to represent whether the vehicle A complies with traffic regulations. The efficiency item T is used to represent a destination arrival time, braking and steering priorities for obstacle avoidance, and overtaking behavior and yielding behavior generated in a process in which the vehicle A and a surrounding vehicle of the vehicle A travel.

Optionally, the cost function is:

$$G = w_1 S + w_2 C + w_3 R + w_4 T \quad,$$

where

$w_1$, $w_2$, $W_3$, and $w_4$ are driving style coefficients of the driver of the vehicle A.

Optionally, the safety item S is determined based on a longitudinal distance between the vehicle A and a front vehicle of the vehicle A, a difference between a longitudinal velocity of the vehicle A and a longitudinal velocity of the front vehicle of the vehicle A, and a lateral distance between the vehicle A and a left/right adjacent vehicle of the vehicle A. The comfort item C is determined based on a difference between an actual velocity of the vehicle A and a desired velocity of the vehicle A, and a difference between an actual acceleration of the vehicle A and a desired acceleration of the vehicle A. The compliance item R is determined based on a difference between a horizontal coordinate of a location of the vehicle A that is desired by the vehicle A and a horizontal coordinate of a lane centerline of a lane on which the vehicle A is located, a difference between a vertical coordinate of the location of the vehicle A that is desired by the vehicle A and a vertical coordinate of the lane centerline of the lane on which the vehicle A is located, and a difference between the desired velocity of the vehicle A and a maximum limit velocity of the lane on which the vehicle A is located. The efficiency item T is determined based on a difference between a horizontal coordinate of a current location of the vehicle A and the horizontal coordinate of the desired location of the vehicle A, and a difference between a vertical coordinate of the current location of the vehicle A and the vertical coordinate of the desired location of the vehicle A.

Optionally, the safety item S, the comfort item C, the compliance item R, and the efficiency item T are respectively represented as follows:

$$S = \frac{c_3}{(\dfrac{\Delta d}{\Delta v + c_1} - c_2)^p} + c_4 \Delta l \quad,$$

$$C = (\Delta V)^2 + (\Delta A)^2 \quad,$$

$$R = (X_{desired} - X_{centerline})^2 + (Y_{desired} - Y_{centerline})^2 + (V_{desired} - V_{limit})^2 \quad,$$

and

$$T = (X_{desired} - X_{current})^2 + (Y_{desired} - Y_{current})^2,$$

where

$c_1$, $c_2$, $c_3$, $c_4$, and $p$ are constants, $\Delta d$ is the longitudinal distance between the vehicle A and the front vehicle of the vehicle A, $\Delta l$ is the lateral distance between the vehicle A and the left/right adjacent vehicle of the vehicle A, $\Delta v$ is the difference between the longitudinal velocity of the vehicle A and the longitudinal velocity of the front vehicle of the vehicle A, $\Delta V$ is the difference between the actual velocity of the vehicle A and the desired velocity of the vehicle A, $\Delta A$ is the difference between the actual acceleration of the vehicle A and the desired acceleration of the vehicle A, $X_{desired}$ and $Y_{desired}$ are respectively the horizontal coordinate and the vertical coordinate of the desired location of the vehicle A, $X_{centerline}$ and $Y_{centerline}$ are respectively the horizontal coordinate and the vertical coordinate of the lane centerline of the lane on which the vehicle A is located, $V_{limit}$ is the maximum limit velocity of the lane on which the vehicle A is located, $V_{desired}$ is the desired velocity of the vehicle A, and $X_{current}$ and $Y_{current}$ are respectively the horizontal coordinate and the vertical coordinate of the current location of the vehicle A.

Optionally, the driving track obtaining apparatus further includes:

a conversion unit 303, configured to convert a two-dimensional spatial map into a second three-dimensional spatial-temporal map before the calculation unit calculates the driving track of the vehicle A on the first three-dimensional spatial-temporal map according to the cost function of the driver; and

a second obtaining unit 304, configured to obtain a vehicle body safety envelope area of a surrounding vehicle of the vehicle A.

The second obtaining unit 304 includes:
a calculation subunit 3041, configured to calculate a predicted driving track of the surrounding vehicle of the vehicle A based on a driving style of a driver, a velocity, an acceleration, and a yaw angle of the surrounding vehicle of the vehicle A.

Optionally, the calculation subunit 3041 is further configured to:
before the predicted driving track of the surrounding vehicle of the vehicle A is obtained through calculation based on the driving style of the driver, the velocity, the acceleration, and the yaw angle of the surrounding vehicle of the vehicle A, obtain the driving style of the driver of the surrounding vehicle of the vehicle A through calculation based on the velocity and the acceleration of the surrounding vehicle of the vehicle A.

Specifically, the velocity of the surrounding vehicle of the vehicle A includes a lateral velocity of the surrounding vehicle of the vehicle A, the acceleration of the surrounding vehicle of the vehicle A includes a lateral acceleration of the surrounding vehicle of the vehicle A, and the driving style of the driver of the surrounding vehicle of the vehicle A includes a lateral driving style.

The calculation subunit 3041 is specifically configured to:

obtain lateral velocities and lateral accelerations of N surrounding vehicles of the vehicle A;

perform the following operations on a lateral velocity and a lateral acceleration of an $i^{th}$ surrounding vehicle in the N surrounding vehicles of the vehicle A, to obtain N first lateral driving styles, where i = 1, 2, ..., and N, and N is an integer greater than 1:

separately inputting the lateral velocity and the lateral acceleration of the $i^{th}$ surrounding vehicle of the vehicle A into a lateral aggressive driving model, a lateral conservative driving model, and a lateral normal driving model, to calculate three first probabilities;

determining the first lateral driving style based on the three first probabilities, where the first lateral driving style is a driving style corresponding to a driving model corresponding to a largest probability in the three first probabilities; and

performing average filtering on the N first lateral driving styles to obtain the lateral driving style of the driver of the surrounding vehicle of the vehicle A.

Specifically, the velocity of the surrounding vehicle of the vehicle A includes a longitudinal velocity of the surrounding vehicle of the vehicle A, the acceleration of the surrounding vehicle of the vehicle A includes a longitudinal acceleration of the surrounding vehicle of the vehicle A, and the driving style of the driver of the surrounding vehicle of the vehicle A includes a longitudinal driving style.

The calculation subunit 3041 is specifically configured to:

obtain longitudinal velocities and longitudinal accelerations of N surrounding vehicles of the vehicle A;

perform the following operations on a longitudinal velocity and a longitudinal acceleration of an $i^{th}$ surrounding vehicle in the N surrounding vehicles of the vehicle A, to obtain N first longitudinal driving styles, where i = 1, 2, ..., and N, and N is an integer greater than 1:

> separately inputting the longitudinal velocity and the longitudinal acceleration of the $i^{th}$ surrounding vehicle of the vehicle A into a longitudinal aggressive driving model, a longitudinal conservative driving model, and a longitudinal normal driving model, to calculate three second probabilities;
> determining the first longitudinal driving style based on the three second probabilities, where the first longitudinal driving style is a driving style corresponding to a driving model corresponding to a largest probability in the three second probabilities; and
> performing average filtering on the N first longitudinal driving styles to obtain the longitudinal driving style of the driver of the surrounding vehicle of the vehicle A.

The second obtaining unit 304 further includes: a determining subunit 3042, configured to determine the vehicle body safety envelope area of the surrounding vehicle of the vehicle Abased on the predicted driving track of the surrounding vehicle of the vehicle A and the driving style of the driver of the surrounding vehicle of the vehicle A.

The driving track obtaining apparatus 300 further includes: a deletion unit 305, configured to delete, from the second three-dimensional spatial-temporal map, an area corresponding to the vehicle body safety envelope area of the surrounding vehicle of the vehicle A, to obtain the first three-dimensional spatial-temporal map.

Optionally, the driving track obtaining apparatus 300 further includes:

> an optimization unit 306, configured to optimize the driving track of the vehicle A based on a vehicle kinematic model to obtain an optimized driving track; and
> a sending unit 307, configured to send the optimized driving track to a control apparatus of the vehicle A.

Optionally, the driving track obtaining apparatus 300 further includes an adjustment unit 308.

The first obtaining unit 301 is further configured to: after the sending unit sends the optimized driving track to the control apparatus of the vehicle A, obtain operation information of the driver of the vehicle A and surrounding vehicle information when it is detected that the driver of the vehicle A takes over the vehicle A.

The adjustment unit 308 is configured to adjust the driving style coefficient of the driver of the vehicle A based on the operation information and the surrounding vehicle information to obtain an adjusted driving style coefficient.

The driving style coefficient of the driver of the vehicle A includes a coefficient of the safety item S, a coefficient of the comfort item C, a coefficient of the compliance item R, and a coefficient of the efficiency item T, and the driving style coefficient of the driver of the vehicle A includes the coefficient of the safety item S, the coefficient of the comfort item C, and the coefficient of the efficiency item T.

The adjustment unit 308 is specifically configured to:

> decrease the coefficient of the safety item S when the surrounding vehicle information includes that there is a vehicle around the vehicle A, and the operation information includes accelerating without steering; or
> increase or decrease the coefficient of the safety item S and the coefficient of the efficiency item T when the surrounding vehicle information includes that there is a vehicle around the vehicle A, and the operation information includes steering with accelerating; or
> increase or decrease the coefficient of the safety item S when the surrounding vehicle information includes that there is a vehicle around the vehicle A, and the operation information includes steering with a constant-velocity; or
> increase the coefficient of the safety item S when the surrounding vehicle information includes that there is a vehicle around the vehicle A, and the operation information includes decelerating without steering; or
> increase or decrease the coefficient of the safety item S and the coefficient of the efficiency item T when the surrounding vehicle information includes that there is a vehicle around the vehicle A, and the operation information includes steering with decelerating; or
> increase the coefficient of the safety item S and the coefficient of the efficiency item T when the surrounding vehicle information includes that there is no vehicle around the vehicle A, and the operation information includes accelerating without steering or decelerating without steering.

The driving track obtaining apparatus 300 further includes a first storage unit 309, configured to store the adjusted driving style coefficient.

Optionally, the driving track obtaining apparatus 300 further includes that:
the calculation unit 302 is further configured to calculate the driving style coefficient of the driver of the vehicle A according to a genetic algorithm when a manual driving instruction is received.

Specifically, the calculation unit 302 is further specifically configured to:

obtain a value range of the driving style coefficient of the driver of the vehicle A;

randomly obtain M groups of driving style coefficients from the value range of the driving style coefficient;

calculate the M groups of driving style coefficients according to the genetic algorithm to obtain M predicted driving tracks, where the M predicted driving tracks are in a one-to-one correspondence with the M groups of driving style coefficients;

obtain an actual driving track of the vehicle A; and

compare each of the M predicted driving tracks with the actual driving track to obtain the driving style coefficient of the driver of the vehicle A, where the driving style coefficient of the driver of the vehicle A is a driving style coefficient corresponding to a predicted driving track that is most similar to the actual driving track in the M predicted driving tracks.

The driving track obtaining apparatus 300 further includes a second storage unit 310, configured to store the driving style coefficient of the driver of the vehicle A.

It should be noted that the foregoing units (the first obtaining unit 301, the calculation unit 302, the conversion unit 303, the second obtaining unit 304, the deletion unit 305, the optimization unit 306, the sending unit 307, the adjustment unit 308, the first storage unit 309, and the second storage unit 310) are configured to perform related steps in the foregoing method.

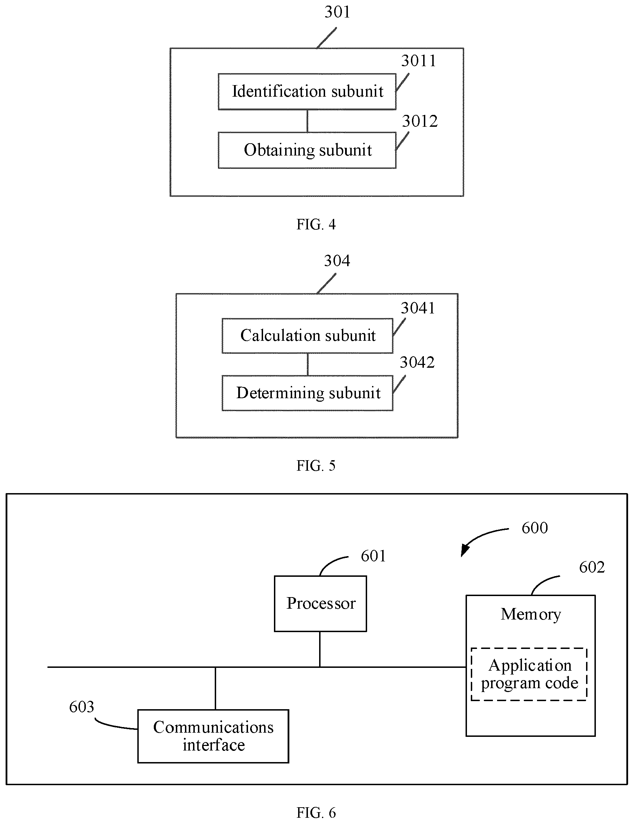

In this embodiment, the driving track obtaining apparatus 300 is presented in a form of a unit. The "unit" herein may be an application-specific integrated circuit (application-specific integrated circuit, ASIC), a processor and a memory that execute one or more software or firmware programs, an integrated logic circuit, and/or another device that can provide the foregoing functions. In addition, the first obtaining unit 301, the calculation unit 302, the conversion unit 303, the second obtaining unit 304, the deletion unit 305, the optimization unit 306, the sending unit 307, the adjustment unit 308, the first storage unit 309, and the second storage unit 310 may be implemented by using the processor 601 of the driving track obtaining apparatus shown in FIG. 6.

As shown in FIG. 6, an automatic driving track obtaining apparatus 600 may be implemented as a structure shown in FIG. 6. The automatic driving track obtaining apparatus 600 includes at least one processor 601, at least one memory 602, and at least one communications interface 603. The processor 601, the memory 602, and the communications interface 603 are connected and complete mutual communication by using a communications bus.

The processor 601 may be a general-purpose central processing unit (CPU), a microprocessor, an application-specific integrated circuit (application-specific integrated circuit, ASIC), or one or more integrated circuits for controlling program execution of the foregoing solution.

The communications interface 603 is configured to communicate with another device or a communications network, such as the Ethernet, a radio access network (RAN), or a wireless local area network (Wireless Local Area Networks, WLAN).

The memory 602 may be a read-only memory (read-only memory, ROM) or another type of static storage device that can store static information and instructions, or a random access memory (random access memory, RAM) or another type of dynamic storage device that can store information and instructions; or may be an electrically erasable programmable read-only memory (Electrically Erasable Programmable Read-Only Memory, EEPROM), a compact disc read-only memory (Compact Disc Read-Only Memory, CD-ROM) or other optic disk storage, optical disc storage (including a compact optical disc, a laser disc, an optical disc, a digital general-purpose optical disc, a blu-ray optical disc, or the like), or magnetic disk storage media or other magnetic storage devices, or any other media that can be accessed by a computer and that can be configured to carry or store desired program code having an instruction or data structure form, without being limited thereto. The memory may exist independently, and is connected to the processor by using the bus. The memory may be integrated with the processor.

The memory 602 is configured to store application program code for executing the foregoing solution, and the processor 601 controls the execution. The processor 601 is configured to execute the application program code stored in the memory 602.

The code stored in the memory 602 may be used to perform the driving track obtaining method performed by the driving track obtaining apparatus provided above, for example, obtaining a driving style coefficient of a driver of the vehicle A; calculating a cost function of the driver of the vehicle A based on the driving style coefficient of the driver of the vehicle A, where the cost function is used to represent costs paid when the vehicle A travels from an initial node to a current node in a driving track of the vehicle A; and obtaining the driving track of the vehicle A on a first three-dimensional spatial-temporal map according to the cost function of the driver.

It should be noted that, to make the description brief, the foregoing method embodiments are expressed as a series of actions. However, a person skilled in the art should appreciate that the present invention is not limited to the described action sequence, because according to the present invention, some steps may be performed in other sequences or performed simultaneously. In addition, a person skilled in the art should also appreciate that all the embodiments described in the specification are example embodiments, and the related actions and modules are not necessarily mandatory to the present invention.

In the foregoing embodiments, the description of each embodiment has respective focuses. For a part that is not described in detail in an embodiment, refer to related descriptions in other embodiments.

In the several embodiments provided in this application, it should be understood that the disclosed apparatus may be implemented in other manners. For example, the described apparatus embodiments are merely examples. For example, the unit division is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of the embodiments.

In addition, functional units in the embodiments of the present invention may be integrated into one processing unit, or each of the units may exist alone physically, or two or more units are integrated into one unit. The integrated unit may be implemented in a form of hardware, or may be implemented in a form of a software functional unit.

When the integrated unit is implemented in the form of a software functional unit and sold or used as an independent product, the integrated unit may be stored in a computer-readable storage medium. Based on such an understanding, the technical solutions of the present invention essentially, or the part contributing to the prior art, or all or some of the technical solutions may be implemented in the form of a software product. The software product is stored in a storage and includes several instructions for instructing a computer device (which may be a personal computer, a server, or a network device) to perform all or some of the steps of the methods described in the embodiments of the present invention. The foregoing storage medium includes: any medium that can store program code, such as a USB flash drive, a read-only memory (ROM, Read-Only Memory), a random access memory (RAM, Random Access Memory), a removable hard disk, a magnetic disk, or an optical disc.

A person of ordinary skill in the art may understand that all or some of the steps of the methods in the embodiments may be implemented by a program instructing relevant hardware. The program may be stored in a computer-readable storage medium. The storage medium may include a flash memory, a read-only memory (Read-Only Memory, ROM for short), a random access memory (Random Access Memory, RAM for short), a magnetic disk, and an optical disc.

**Claims**

1. An automatic driving track obtaining method, the method being performed by a processor, the method comprising:

   obtaining (S101) a driving style coefficient of a driver of a vehicle A;
   obtaining (5102) a cost function of the driver of the vehicle A through calculation based on the driving style coefficient of the driver of the vehicle A, wherein the cost function is used to represent costs paid when the vehicle A travels from an initial node to a current node in an automatic driving track of the vehicle A, the current node is after the initial node; wherein the cost function is a function constructed based on at least one of a safety item S, a comfort item C, a compliance item R, and an efficiency item T, wherein the safety item S, the comfort item C, the compliance item R, and the efficiency item T are driving habit parameters of the driver of the vehicle A, the safety item S is used to represent a vehicle following habit of the vehicle A and a safe distance between the vehicle A and a surrounding obstacle, the comfort item C is used to represent a velocity change degree and an acceleration change degree of the vehicle A, the compliance item R is used to represent whether the vehicle A complies with traffic regulations, and the efficiency item T is used to represent a destination arrival time, braking and steering priorities for obstacle avoidance, and overtaking behavior and yielding behavior generated in a process in which the vehicle A and a surrounding vehicle of the vehicle A travel; and
   obtaining (S103) the automatic driving track of the vehicle A on a first three-dimensional spatial-temporal map through calculation according to the cost function.

2. The method according to claim 1, wherein the obtaining (S10 the driving style coefficient of the driver of the vehicle A comprises:

   identifying an identity of the driver of the vehicle A when an automatic driving instruction is received; and
   obtaining (S205) the driving style coefficient of the driver of the vehicle A based on the identity of the driver of the vehicle A.

3. The method according to claim 1 or 2, wherein the obtaining (S103) the automatic driving track of the vehicle A on a first three-dimensional spatial-temporal map through calculation according to the cost function comprises: calculating location information of a node in the automatic driving track of the vehicle A to obtain the automatic driving track of the vehicle A, wherein location information of a second node that is adjacent to a first node in the driving track of the vehicle A and that is after the first node is obtained through calculation based on location information of the first node by using the following method:

obtaining location information of $N_A*N_\Theta$ candidate nodes through calculation based on the location information of the first node, an acceleration change set of the vehicle A, and a yaw angle change set of the vehicle A, wherein $N_A$ is a quantity of elements in the yaw angle change set, $N_\Theta$ is a quantity of elements in the acceleration change set, and both $N_A$ and $N_\Theta$ are integers greater than 1; and evaluating location information of each candidate node in the location information of the $N_A*N_\Theta$ candidate nodes according to a heuristic function and the cost function to obtain the location information of the second node, wherein the location information of the second node is location information of a node with a smallest evaluation value in the location information of the $N_A*N_\Theta$ candidate nodes, and the heuristic function is used to represent costs that need to be paid when the vehicle A travels from the first node to a target point in the automatic driving track of the vehicle A.

4. The method according to any one of claims 1 to 3, wherein before the obtaining (S103) the automatic driving track of the vehicle A on a first three-dimensional spatial-temporal map through calculation according to the cost function of the driver, the method further comprises:

converting a two-dimensional spatial map into a second three-dimensional spatial-temporal map; obtaining a vehicle body safety envelope area of the surrounding vehicle of the vehicle A; and deleting, from the second three-dimensional spatial-temporal map, an area corresponding to the vehicle body safety envelope area of the surrounding vehicle of the vehicle A, to obtain the first three-dimensional spatial-temporal map.

5. The method according to claim 4, wherein the obtaining the vehicle body safety envelope area of the surrounding vehicle of the vehicle A comprises:

obtaining a predicted driving track of the surrounding vehicle of the vehicle A through calculation based on a driving style of a driver, a velocity, an acceleration, and a yaw angle of the surrounding vehicle of the vehicle A; and determining the vehicle body safety envelope area of the surrounding vehicle of the vehicle A based on the predicted driving track of the surrounding vehicle of the vehicle A and the driving style of the driver of the surrounding vehicle of the vehicle A.

6. The method according to claim 5, wherein before the obtaining the predicted driving track of the surrounding vehicle of the vehicle A through calculation based on a driving style of a driver, a velocity, an acceleration, and a yaw angle of the surrounding vehicle of the vehicle A, the method further comprises: obtaining the driving style of the driver of the surrounding vehicle of the vehicle A through calculation based on the velocity and the acceleration of the surrounding vehicle of the vehicle A.

7. The method according to any one of claim 6, wherein the method further comprises:

optimizing the automatic driving track of the vehicle A based on a vehicle kinematic model to obtain an optimized driving track; and sending the optimized driving track to a control apparatus of the vehicle A.

8. The method according to claim 7, wherein after the sending the optimized driving track to the control apparatus of the vehicle A, the method further comprises:

obtaining operation information of the driver of the vehicle A and surrounding vehicle information when it is detected that the driver of the vehicle A takes over the vehicle A; adjusting the driving style coefficient of the driver of the vehicle A based on the operation information and the surrounding vehicle information to obtain an adjusted driving style coefficient; and storing the adjusted driving style coefficient.

9. The method according to claim 1, wherein the method further comprises

   calculating the driving style coefficient of the driver of the vehicle A according to a genetic algorithm when a manual driving instruction is received; and
   storing the driving style coefficient of the driver of the vehicle A.

10. An automatic driving track obtaining apparatus (300), comprising:

    a first obtaining unit (301), configured to obtain a driving style coefficient of a driver of a vehicle A; and
    a calculation unit (302), configured to obtain a cost function of the driver of the vehicle A through calculation based on the driving style coefficient of the driver of the vehicle A, wherein the cost function is used to represent costs paid when the vehicle A travels from an initial node to a current node in an automatic driving track of the vehicle A, the current node is after the initial node; wherein the cost function is a function constructed based on at least one of a safety item S, a comfort item C, a compliance item R, and an efficiency item T, wherein the safety item S, the comfort item C, the compliance item R, and the efficiency item T are driving habit parameters of the driver of the vehicle A, the safety item S is used to represent a vehicle following habit of the vehicle A and a safe distance between the vehicle A and a surrounding obstacle, the comfort item C is used to represent a velocity change degree and an acceleration change degree of the vehicle A, the compliance item R is used to represent whether the vehicle A complies with traffic regulations, and the efficiency item T is used to represent a destination arrival time, braking and steering priorities for obstacle avoidance, and overtaking behavior and yielding behavior generated in a process in which the vehicle A and a surrounding vehicle of the vehicle A travel; and
    the calculation unit (302) is configured to obtain the automatic driving track of the vehicle A on a first three-dimensional spatial-temporal map through calculation according to the cost function of the driver.

11. The automatic driving track obtaining apparatus (300) according to claim 10, wherein the first obtaining unit (301) comprises:

    an identification subunit (3011), configured to identify an identity of the driver of the vehicle A when an automatic driving instruction is received; and
    an obtaining subunit (3012), configured to obtain the driving style coefficient of the driver of the vehicle A based on the identity of the driver of the vehicle A.

12. The automatic driving track obtaining apparatus (300) according to claim 10 or 11, wherein the calculation unit (302) is specifically configured to:
    calculate location information of a node in the automatic driving track of the vehicle A to obtain the automatic driving track of the vehicle A, wherein location information of a second node that is adjacent to a first node in the driving track of the vehicle A and that is after the first node is obtained through calculation based on location information of the first node by using the following method:

    obtaining location information of $N_A*N_\Theta$ candidate nodes through calculation based on the location information of the first node, an acceleration change set of the vehicle A, and a yaw angle change set of the vehicle A, wherein $N_A$ is a quantity of elements in the yaw angle change set, $N_\Theta$ is a quantity of elements in the acceleration change set, and both $N_A$ and $N_\Theta$ are integers greater than 1; and
    evaluating location information of each candidate node in the location information of the $N_A*N_\Theta$ candidate nodes according to a heuristic function and the cost function to obtain the location information of the second node, wherein the location information of the second node is location information of a node with a smallest evaluation value in the location information of the $N_A*N_\Theta$ candidate nodes, and the heuristic function is used to represent costs that need to be paid when the vehicle A travels from the first node to a target point in the automatic driving track of the vehicle A.

13. The automatic driving track obtaining apparatus (300) according to any one of claims 10 to 12, wherein the automatic driving track obtaining apparatus (300) further comprises:

    a conversion unit (303), configured to convert a two-dimensional spatial map into a second three-dimensional spatial-temporal map before the calculation unit obtains the automatic driving track of the vehicle A on the first three-dimensional spatial-temporal map through calculation according to the cost function of the driver;

a second obtaining unit (304), configured to obtain a vehicle body safety envelope area of the surrounding vehicle of the vehicle A; and

a deletion unit (305), configured to delete, from the second three-dimensional spatial-temporal map, an area corresponding to the vehicle body safety envelope area of the surrounding vehicle of the vehicle A, to obtain the first three-dimensional spatial-temporal map.

14. The automatic driving track obtaining apparatus (300) according to claim 13, wherein the second obtaining unit (304) comprises:

a calculation subunit (3041), configured to obtain a predicted driving track of the surrounding vehicle of the vehicle A through calculation based on a driving style of a driver, a velocity, an acceleration, and a yaw angle of the surrounding vehicle of the vehicle A; and

a determining subunit (3042), configured to determine the vehicle body safety envelope area of the surrounding vehicle of the vehicle A based on the predicted driving track of the surrounding vehicle of the vehicle A and the driving style of the driver of the surrounding vehicle of the vehicle A.

15. The automatic driving track obtaining apparatus according to claim 14, wherein the calculation subunit (3041) is further configured to:

before obtaining the predicted driving track of the surrounding vehicle of the vehicle A through calculation based on the driving style of the driver, the velocity, the acceleration, and the yaw angle of the surrounding vehicle of the vehicle A, obtain the driving style of the driver of the surrounding vehicle of the vehicle A through calculation based on the velocity and the acceleration of the surrounding vehicle of the vehicle A.

16. The automatic driving track obtaining apparatus according to claim 15, wherein the automatic driving track obtaining apparatus further comprise:

an optimization unit, configured to optimize the automatic driving track of the vehicle A based on a vehicle kinematic model to obtain an optimized driving track; and

a sending unit, configured to send an optimized driving track to a control apparatus of the vehicle A.

17. The automatic driving track obtaining apparatus (300) according to claim 16, wherein the first obtaining unit (301) is further configured to: after a sending unit (307) sends the optimized driving track to a control apparatus of the vehicle A, obtain operation information of the driver of the vehicle A and surrounding vehicle information when it is detected that the driver of the vehicle A takes over the vehicle A;

the driving track obtaining apparatus (300) further comprises:

an adjustment unit (308), configured to adjust the driving style coefficient of the driver of the vehicle A based on the operation information and the surrounding vehicle information to obtain an adjusted driving style coefficient; and

a first storage unit (309), configured to store the adjusted driving style coefficient.

18. The automatic driving track obtaining apparatus (300) according to claim 10, wherein the

automatic driving track obtaining apparatus (300) further comprises a second storage unit (310), configured to store the driving style coefficient of the driver of the vehicle A; and

the calculation unit (302) is further configured to calculate the driving style coefficient of the driver of the vehicle A according to a genetic algorithm when a manual driving instruction is received.

19. A computer-readable storage medium (602), wherein the computer-readable storage medium comprises a program instruction, and when the program instruction is run on a computer, the computer is enabled to perform the method according to any one of claims 1 to 9.

**Patentansprüche**

1. Verfahren zum Erlangen einer automatischen Fahrspur, wobei das Verfahren von einem Prozessor durchgeführt wird, wobei das Verfahren Folgendes umfasst:

Erlangen (S101) eines Fahrstilkoeffizienten eines Fahrers eines Fahrzeugs A;

Erlangen (S102) einer Kostenfunktion des Fahrers des Fahrzeugs A durch Berechnung basierend auf dem Fahrstilkoeffizienten des Fahrers des Fahrzeugs A, wobei die Kostenfunktion verwendet wird, um die Kosten darzustellen, die gezahlt werden, wenn das Fahrzeug A von einem Anfangsknoten zu einem aktuellen Knoten in einer automatischen Fahrspur des Fahrzeugs A fährt, wobei der aktuelle Knoten nach dem Anfangsknoten liegt; wobei die Kostenfunktion eine Funktion ist, die basierend auf mindestens einem von einem Sicherheitselement S, einem Komfortelement C, einem Konformitätselement R und einem Effizienzelement T aufgebaut ist, wobei das Sicherheitselement S, das Komfortelement C, das Konformitätselement R und das Effizienzelement T Fahrgewohnheitsparameter des Fahrers des Fahrzeugs A sind, das Sicherheitselement S verwendet wird, um eine Fahrzeugfolgegewohnheit des Fahrzeugs A und einen sicheren Abstand zwischen dem Fahrzeug A und einem umgebenden Hindernis darzustellen, das Komfortelement C verwendet wird, um einen Geschwindigkeitsänderungsgrad und einen Beschleunigungsänderungsgrad des Fahrzeugs A darzustellen, das Konformitätselement R verwendet wird, um darzustellen, ob das Fahrzeug A die Verkehrsvorschriften einhält, und das Effizienzelement T verwendet wird, um eine Zielankunftszeit, Brems- und Lenkprioritäten zur Hindernisvermeidung sowie Überholverhalten und Ausweichverhalten, die in einem Prozess generiert werden, in welchem das Fahrzeug A und ein umgebendes Fahrzeug des Fahrzeugs A fahren, darzustellen; und

Erlangen (S103) der automatischen Fahrspur des Fahrzeugs A auf einer ersten dreidimensionalen räumlich-zeitlichen Karte durch Berechnung gemäß der Kostenfunktion.

2. Verfahren nach Anspruch 1, wobei das Erlangen (S10) des Fahrstilkoeffizienten des Fahrers des Fahrzeugs A Folgendes umfasst:

   Identifizieren einer Identität des Fahrers des Fahrzeugs A, wenn eine automatische Fahranweisung empfangen wird; und

   Erlangen (S205) des Fahrstilkoeffizienten des Fahrers des Fahrzeugs A basierend auf der Identität des Fahrers des Fahrzeugs A.

3. Verfahren nach Anspruch 1 oder 2, wobei das Erlangen (S103) der automatischen Fahrspur des Fahrzeugs A auf einer ersten dreidimensionalen räumlich-zeitlichen Karte durch Berechnung gemäß der Kostenfunktion Folgendes umfasst:

   Berechnen von Standortinformationen eines Knotens in der automatischen Fahrspur des Fahrzeugs A, um die automatische Fahrspur des Fahrzeugs A zu erlangen, wobei Standortinformationen eines zweiten Knotens, der an einem ersten Knoten in der Fahrspur des Fahrzeugs A benachbart ist und nach dem ersten Knoten liegt, durch Berechnung basierend auf den Standortinformationen des ersten Knotens unter Verwendung des folgenden Verfahrens erlangt wurden:

   Erlangen von Standortinformationen von $N_A*N_\Theta$ Kandidatenknoten durch Berechnung basierend auf den Standortinformationen des ersten Knotens, einem Beschleunigungsänderungssatz des Fahrzeugs A und einem Gierwinkeländerungssatz des Fahrzeugs A, wobei $N_A$ eine Menge von Elementen in dem Gierwinkeländerungssatz ist, $N_\Theta$ eine Menge von Elementen in dem Beschleunigungsänderungssatz ist und sowohl $N_A$ als auch $N_\Theta$ ganze Zahlen größer als 1 sind; und

   Auswerten von Standortinformationen jedes Kandidatenknotens in den Standortinformationen der $N_A*N_\Theta$ Kandidatenknoten gemäß einer heuristischen Funktion und der Kostenfunktion, um die Standortinformationen des zweiten Knotens zu erlangen, wobei die Standortinformationen des zweiten Knotens Standortinformationen eines Knotens mit einem kleinsten Auswertungswert in den Standortinformationen der $N_A*N_\Theta$ Kandidatenknoten sind und die heuristische Funktion verwendet wird, um die Kosten darzustellen, die bezahlt werden müssen, wenn das Fahrzeug A von dem ersten Knoten zu einem Zielpunkt in der automatischen Fahrspur des Fahrzeugs A fährt.

4. Verfahren nach einem der Ansprüche 1 bis 3, wobei das Verfahren vor dem Erlangen (S103) der automatischen Fahrspur des Fahrzeugs A auf einer ersten dreidimensionalen räumlich-zeitlichen Karte durch Berechnung gemäß der Kostenfunktion des Fahrers Folgendes umfasst:

   Konvertieren einer zweidimensionalen räumlichen Karte in eine zweite dreidimensionale räumlich-zeitliche Karte;

   Erlangen eines Sicherheitshüllbereichs der Fahrzeugkarosserie des umgebenden Fahrzeugs des Fahrzeugs A; und

   Löschen eines Bereichs aus der zweiten dreidimensionalen räumlich-zeitlichen Karte, der dem Sicherheitshüllbereich der Fahrzeugkarosserie des umgebenden Fahrzeugs des Fahrzeugs A entspricht, um die erste dreidimensionale räumlich-zeitliche Karte zu erlangen.

5. Verfahren nach Anspruch 4, wobei das Erlangen des Sicherheitshüllbereichs der Fahrzeugkarosserie des umgebenden Fahrzeugs des Fahrzeugs A Folgendes umfasst:
Erlangen einer vorhergesagten Fahrspur des umgebenden Fahrzeugs des Fahrzeugs A durch Berechnung basierend auf einem Fahrstil eines Fahrers, einer Geschwindigkeit, einer Beschleunigung und einem Gierwinkel des umgebenden Fahrzeugs des Fahrzeugs A; und Bestimmen des Sicherheitshüllbereichs der Fahrzeugkarosserie des umgebenden Fahrzeugs des Fahrzeugs A basierend auf der vorhergesagten Fahrspur des umgebenden Fahrzeugs des Fahrzeugs A und dem Fahrstil des Fahrers des umgebenden Fahrzeugs des Fahrzeugs A.

6. Verfahren nach Anspruch 5, wobei das Verfahren vor dem Erlangen der vorhergesagten Fahrspur des umgebenden Fahrzeugs des Fahrzeugs A durch Berechnung basierend auf einem Fahrstil eines Fahrers, einer Geschwindigkeit, einer Beschleunigung und eines Gierwinkels des umgebenden Fahrzeugs des Fahrzeugs A ferner Folgendes umfasst:
Erlangen des Fahrstils des Fahrers des umgebenden Fahrzeugs des Fahrzeugs A durch Berechnung basierend auf der Geschwindigkeit und der Beschleunigung des umgebenden Fahrzeugs des Fahrzeugs A.

7. Verfahren nach einem der Ansprüche 6, wobei das Verfahren ferner Folgendes umfasst:

   Optimieren der automatischen Fahrspur des Fahrzeugs A basierend auf einem kinematischen Fahrzeugmodell, um eine optimierte Fahrspur zu erlangen; und
   Senden der optimierten Fahrspur an eine Steuervorrichtung des Fahrzeugs A.

8. Verfahren nach Anspruch 7, wobei das Verfahren nach dem Senden der optimierten Fahrspur an die Steuervorrichtung des Fahrzeugs A ferner Folgendes umfasst:

   Erlangen von Betriebsinformationen des Fahrers des Fahrzeugs A und Informationen über das umgebende Fahrzeug, wenn erfasst wird, dass der Fahrer des Fahrzeugs A das Fahrzeug A übernimmt; Anpassen des Fahrstilkoeffizienten des Fahrers des Fahrzeugs A basierend auf den Betriebsinformationen und den Informationen über das umgebende Fahrzeug, um einen angepassten Fahrstilkoeffizienten zu erlangen; und
   Speichern des angepassten Fahrstilkoeffizienten.

9. Verfahren nach Anspruch 1, wobei das Verfahren ferner Folgendes umfasst:

   Berechnen des Fahrstilkoeffizienten des Fahrers des Fahrzeugs A gemäß einem genetischen Algorithmus, wenn eine manuelle Fahranweisung empfangen wird; und
   Speichern des Fahrstilkoeffizienten des Fahrers des Fahrzeugs A.

10. Vorrichtung (300) zum Erlangen einer automatischen Fahrspur, umfassend:

    eine erste Erlangungseinheit (301), die dazu konfiguriert ist, einen Fahrstilkoeffizienten eines Fahrers eines Fahrzeugs A zu erlangen; und
    eine Berechnungseinheit (302), die dazu konfiguriert ist, eine Kostenfunktion des Fahrers des Fahrzeugs A durch Berechnung basierend auf dem Fahrstilkoeffizienten des Fahrers des Fahrzeugs A zu erlangen, wobei die Kostenfunktion verwendet wird, um die Kosten darzustellen, die gezahlt werden, wenn das Fahrzeug A von einem Anfangsknoten zu einem aktuellen Knoten in einer automatischen Fahrspur des Fahrzeugs A fährt, wobei der aktuelle Knoten nach dem Anfangsknoten liegt; wobei die Kostenfunktion eine Funktion ist, die basierend auf mindestens einem von einem Sicherheitselement S, einem Komfortelement C, einem Konformitätselement R und einem Effizienzelement T aufgebaut ist, wobei das Sicherheitselement S, das Komfortelement C, das Konformitätselement R und das Effizienzelement T Fahrgewohnheitsparameter des Fahrers des Fahrzeugs A sind, das Sicherheitselement S verwendet wird, um eine Fahrzeugfolgegewohnheit des Fahrzeugs A und einen sicheren Abstand zwischen dem Fahrzeug A und einem umgebenden Hindernis darzustellen, das Komfortelement C verwendet wird, um einen Geschwindigkeitsänderungsgrad und einen Beschleunigungsänderungsgrad des Fahrzeugs A darzustellen, das Konformitätselement R verwendet wird, um darzustellen, ob das Fahrzeug A die Verkehrsvorschriften einhält, und das Effizienzelement T verwendet wird, um eine Zielankunftszeit, Brems- und Lenkprioritäten zur Hindernisvermeidung sowie Überholverhalten und Ausweichverhalten, die in einem Prozess generiert werden, in welchem das Fahrzeug A und ein umgebendes Fahrzeug des Fahrzeugs A fahren, darzustellen; und
die Berechnungseinheit (302) dazu konfiguriert ist, die automatische Fahrspur des Fahrzeugs A auf einer ersten dreidimensionalen räumlich-zeitlichen Karte durch Berechnung gemäß der Kostenfunktion des Fahrers zu erlangen.

**11.** Vorrichtung (300) zum Erlangen einer automatischen Fahrspur nach Anspruch 10, wobei die erste Erlangungseinheit (301) Folgendes umfasst:

eine Identifikationsuntereinheit (3011), die dazu konfiguriert ist, eine Identität des Fahrers des Fahrzeugs A zu identifizieren, wenn eine automatische Fahranweisung empfangen wird; und
eine Erlangungsuntereinheit (3012), die dazu konfiguriert ist, den Fahrstilkoeffizienten des Fahrers des Fahrzeugs A basierend auf der Identität des Fahrers des Fahrzeugs A zu erlangen.

**12.** Vorrichtung (300) zum Erlangen einer automatischen Fahrspur nach Anspruch 10 oder 11, wobei die Berechnungseinheit (302) spezifisch dazu konfiguriert ist:
Standortinformationen eines Knotens in der automatischen Fahrspur des Fahrzeugs A zu berechnen, um die automatische Fahrspur des Fahrzeugs A zu erlangen, wobei Standortinformationen eines zweiten Knotens, der an einem ersten Knoten in der Fahrspur des Fahrzeugs A benachbart ist und nach dem ersten Knoten liegt, durch Berechnung basierend auf den Standortinformationen des ersten Knotens unter Verwendung des folgenden Verfahrens erlangt wurden:

Erlangen von Standortinformationen von $N_A*N_\Theta$ Kandidatenknoten durch Berechnung basierend auf den Standortinformationen des ersten Knotens, einem Beschleunigungsänderungssatz des Fahrzeugs A und einem Gierwinkeländerungssatz des Fahrzeugs A, wobei $N_A$ eine Menge von Elementen in dem Gierwinkeländerungssatz ist, $N_\Theta$ eine Menge von Elementen in dem Beschleunigungsänderungssatz ist und sowohl $N_A$ als auch $N_\Theta$ ganze Zahlen größer als 1 sind; und
Auswerten von Standortinformationen jedes Kandidatenknotens in den Standortinformationen der $N_A*N_\Theta$ Kandidatenknoten gemäß einer heuristischen Funktion und der Kostenfunktion, um die Standortinformationen des zweiten Knotens zu erlangen, wobei die Standortinformationen des zweiten Knotens Standortinformationen eines Knotens mit einem kleinsten Auswertungswert in den Standortinformationen der $N_A*N_\Theta$ Kandidatenknoten sind und die heuristische Funktion verwendet wird, um die Kosten darzustellen, die bezahlt werden müssen, wenn das Fahrzeug A von dem ersten Knoten zu einem Zielpunkt in der automatischen Fahrspur des Fahrzeugs A fährt.

**13.** Vorrichtung (300) zum Erlangen einer automatischen Fahrspur nach einem der Ansprüche 10 bis 12, wobei die Vorrichtung (300) zum Erlangen einer automatischen Fahrspur ferner Folgendes umfasst:

eine Konvertierungseinheit (303), die dazu konfiguriert ist, eine zweidimensionale räumliche Karte in eine zweite dreidimensionale räumlich-zeitliche Karte zu konvertieren, bevor die Berechnungseinheit die automatische Fahrspur des Fahrzeugs A auf der ersten dreidimensionalen räumlich-zeitlichen Karte durch Berechnung gemäß der Kostenfunktion des Fahrers erlangt;
eine zweite Erlangungseinheit (304), die dazu konfiguriert ist, einen Sicherheitshüllbereich der Fahrzeugkarosserie des umgebenden Fahrzeugs des Fahrzeugs A zu erlangen; und
eine Löscheinheit (305), die dazu konfiguriert ist, einen Bereich aus der zweiten dreidimensionalen räumlichzeitlichen Karte zu löschen, der dem Sicherheitshüllbereich der Fahrzeugkarosserie des umgebenden Fahrzeugs des Fahrzeugs A entspricht, um die erste dreidimensionale räumlich-zeitliche Karte zu erlangen.

**14.** Vorrichtung (300) zum Erlangen einer automatischen Fahrspur nach Anspruch 13, wobei die zweite Erlangungseinheit (304) Folgendes umfasst:

eine Berechnungsuntereinheit (3041), die dazu konfiguriert ist, eine vorhergesagte Fahrspur des umgebenden Fahrzeugs des Fahrzeugs A durch Berechnung basierend auf einem Fahrstil eines Fahrers, einer Geschwindigkeit, einer Beschleunigung und einem Gierwinkel des umgebenden Fahrzeugs des Fahrzeugs A zu erlangen; und
eine Bestimmungsuntereinheit (3042), die dazu konfiguriert ist, den Sicherheitshüllbereich der Fahrzeugkarosserie des umgebenden Fahrzeugs des Fahrzeugs A basierend auf der vorhergesagten Fahrspur des umgebenden Fahrzeugs des Fahrzeugs A und dem Fahrstil des Fahrers des umgebenden Fahrzeugs des Fahrzeugs A zu bestimmen.

**15.** Vorrichtung zum Erlangen einer automatischen Fahrspur nach Anspruch 14, wobei die Berechnungsuntereinheit (3041) ferner dazu konfiguriert ist:
vor dem Erlangen der vorhergesagten Fahrspur des umgebenden Fahrzeugs des Fahrzeugs A durch Berechnung basierend auf dem Fahrstil des Fahrers, der Geschwindigkeit, der Beschleunigung und dem Gierwinkel des umgebenden Fahrzeugs des Fahrzeugs A, den Fahrstil des Fahrers des umgebenden Fahrzeugs des Fahrzeugs A durch Berechnung basierend auf der Geschwindigkeit und der Beschleunigung des umgebenden Fahrzeugs des Fahrzeugs A zu erlangen.

**16.** Vorrichtung zum Erlangen einer automatischen Fahrspur nach Anspruch 15, wobei die Vorrichtung zum Erlangen einer automatischen Fahrspur ferner Folgendes umfasst:

eine Optimierungseinheit, die dazu konfiguriert ist, die automatische Fahrspur des Fahrzeugs A basierend auf einem kinematischen Fahrzeugmodell zu optimieren, um eine optimierte Fahrspur zu erlangen; und
eine Sendeeinheit, die dazu konfiguriert ist, eine optimierte Fahrspur an eine Steuervorrichtung des Fahrzeugs A zu senden.

**17.** Vorrichtung (300) zum Erlangen einer automatischen Fahrspur nach Anspruch 16, wobei die erste Erlangungseinheit (301) ferner dazu konfiguriert ist: nachdem eine Sendeeinheit (307) die optimierte Fahrspur an eine Steuervorrichtung des Fahrzeugs A gesendet hat, Betriebsinformationen des Fahrers des Fahrzeugs A und Informationen zum umgebenden Fahrzeug zu erlangen, wenn erfasst wird, dass der Fahrer des Fahrzeugs A das Fahrzeug A übernimmt; die Vorrichtung (300) zum Erlangen einer Fahrspur ferner Folgendes umfasst:

eine Anpassungseinheit (308), die dazu konfiguriert ist, den Fahrstilkoeffizienten des Fahrers des Fahrzeugs A basierend auf den Betriebsinformationen und den Informationen über das umgebende Fahrzeug anzupassen, um einen angepassten Fahrstilkoeffizienten zu erlangen; und
eine erste Speichereinheit (309), die dazu konfiguriert ist, den angepassten Fahrstilkoeffizienten zu speichern.

**18.** Vorrichtung (300) zum Erlangen einer automatischen Fahrspur nach Anspruch 10, wobei die Vorrichtung (300) zum Erlangen einer automatischen Fahrspur ferner eine zweite Speichereinheit (310) umfasst, die dazu konfiguriert ist, den Fahrstilkoeffizienten des Fahrers des Fahrzeugs A zu speichern; und
die Berechnungseinheit (302) ferner dazu konfiguriert ist, den Fahrstilkoeffizienten des Fahrers des Fahrzeugs A gemäß einem genetischen Algorithmus zu berechnen, wenn eine manuelle Fahranweisung empfangen wird.

**19.** Computerlesbares Speichermedium (602), wobei das computerlesbare Speichermedium eine Programmanweisung umfasst und, wenn die Programmanweisung auf einem Computer ausgeführt wird, der Computer in der Lage ist, das Verfahren nach einem der Ansprüche 1 bis 9 durchzuführen.

**Revendications**

**1.** Procédé d'obtention de trajectoire de conduite automatique, le procédé étant réalisé par un processeur, le procédé comprenant :

l'obtention (S101) d'un coefficient de style de conduite d'un conducteur d'un véhicule A ;
l'obtention (S102) d'une fonction de coût du conducteur du véhicule A par un calcul basé sur le coefficient de style de conduite du conducteur du véhicule A, dans lequel la fonction de coût est utilisée pour représenter les coûts payés lorsque le véhicule A se déplace d'un noeud initial à un noeud actuel dans une trajectoire de conduite automatique du véhicule A, le noeud actuel se trouvant après le noeud initial ; dans lequel la fonction de coût est une fonction construite sur la base d'au moins un élément parmi un élément de sécurité S, un élément de confort C, un élément de conformité R et un élément d'efficacité T, dans lequel l'élément de sécurité S, l'élément de confort C, l'élément de conformité R et l'élément d'efficacité T sont des paramètres d'habitude de conduite du conducteur du véhicule A, l'élément de sécurité S est utilisé pour représenter une habitude de suivi de véhicule du véhicule A et une distance de sécurité entre le véhicule A et un obstacle environnant, l'élément de confort C est utilisé pour représenter un degré de changement de vitesse et un degré de changement d'accélération du véhicule A, l'élément de conformité R est utilisé pour représenter si le véhicule A respecte le code de la route, et l'élément d'efficacité T est utilisé pour représenter une heure d'arrivée à destination, des priorités de freinage et de direction pour éviter des obstacles, ainsi qu'un comportement de dépassement et un comportement visant à céder le passage générés dans un processus dans lequel le véhicule A et un véhicule environnant du véhicule A se déplacent ; et

l'obtention (S103) de la trajectoire de conduite automatique du véhicule A sur une première carte spatio-temporelle tridimensionnelle par un calcul selon la fonction de coût.

2. Procédé selon la revendication 1, dans lequel l'obtention (S10) du coefficient de style de conduite du conducteur du véhicule A comprend :

l'identification d'une identité du conducteur du véhicule A lorsqu'une instruction de conduite automatique est reçue ; et

l'obtention (S205) du coefficient de style de conduite du conducteur du véhicule A sur la base de l'identité du conducteur du véhicule A.

3. Procédé selon la revendication 1 ou 2, dans lequel l'obtention (S103) de la trajectoire de conduite automatique du véhicule A sur une première carte spatio-temporelle tridimensionnelle par un calcul selon la fonction de coût comprend :

le calcul d'informations de localisation d'un noeud dans la trajectoire de conduite automatique du véhicule A pour obtenir la trajectoire de conduite automatique du véhicule A, dans lequel des informations de localisation d'un second noeud qui est adjacent à un premier noeud dans la trajectoire de conduite du véhicule A et qui est obtenu après que le premier noeud a été obtenu par un calcul basé sur des informations de localisation du premier noeud à l'aide du procédé suivant :

l'obtention des informations de localisation de $N_A*N_\theta$ noeuds candidats par un calcul basé sur les informations de localisation du premier noeud, un ensemble de changements d'accélération du véhicule A et un ensemble de changements d'angle de lacet du véhicule A, dans lequel $N_A$ est une quantité d'éléments dans l'ensemble de changements d'angle de lacet, $N_\theta$ est une quantité d'éléments dans l'ensemble de changements d'accélération, et $N_A$ et $N_\theta$ sont tous deux des entiers supérieurs à 1 ; et

l'évaluation d'informations de localisation de chaque noeud candidat dans les informations de localisation des $N_A*N_\theta$ noeuds candidats selon une fonction heuristique et la fonction de coût pour obtenir les informations de localisation du second noeud, dans lequel les informations de localisation du second noeud sont des informations de localisation d'un noeud avec une plus petite valeur d'évaluation dans les informations de localisation des $N_A*N_\theta$ noeuds candidats, et la fonction heuristique est utilisée pour représenter les coûts qui doivent être payés lorsque le véhicule A se déplace du premier noeud vers un point cible dans la trajectoire de conduite automatique du véhicule A.

4. Procédé selon l'une quelconque des revendications 1 à 3, dans lequel avant l'obtention (S103) de la trajectoire de conduite automatique du véhicule A sur une première carte spatio-temporelle tridimensionnelle par un calcul selon la fonction de coût du conducteur, le procédé comprend également :

la conversion d'une carte spatiale bidimensionnelle en une seconde carte spatio-temporelle tridimensionnelle ;

l'obtention d'une zone d'enveloppe de sécurité de carrosserie de véhicule du véhicule environnant du véhicule A ; et

la suppression, de la seconde carte spatio-temporelle tridimensionnelle, d'une zone correspondant à la zone d'enveloppe de sécurité de carrosserie de véhicule du véhicule environnant du véhicule A, pour obtenir la première carte spatio-temporelle tridimensionnelle.

5. Procédé selon la revendication 4, dans lequel l'obtention de la zone d'enveloppe de sécurité de carrosserie de véhicule du véhicule environnant du véhicule A comprend :

l'obtention d'une trajectoire de conduite prédite du véhicule environnant du véhicule A par un calcul basé sur un style de conduite d'un conducteur, une vitesse, une accélération et un angle de lacet du véhicule environnant du véhicule A ; et

la détermination de la zone d'enveloppe de sécurité de carrosserie de véhicule du véhicule environnant du véhicule A sur la base de la trajectoire de conduite prédite du véhicule environnant du véhicule A et du style de conduite du conducteur du véhicule environnant du véhicule A.

6. Procédé selon la revendication 5, dans lequel avant l'obtention de la trajectoire de conduite prédite du véhicule environnant du véhicule A par un calcul basé sur un style de conduite d'un conducteur, une vitesse, une accélération et un angle de lacet du véhicule environnant du véhicule A, le procédé comprend également :

l'obtention du style de conduite du conducteur du véhicule environnant du véhicule A par un calcul basé sur la vitesse et l'accélération du véhicule environnant du véhicule A.

7. Procédé selon une quelconque revendication 6, dans lequel le procédé comprend également :

l'optimisation de la trajectoire de conduite automatique du véhicule A sur la base d'un modèle cinématique de véhicule pour obtenir une trajectoire de conduite optimisée ; et
l'envoi de la trajectoire de conduite optimisée à un appareil de commande du véhicule A.

8. Procédé selon la revendication 7, dans lequel après l'envoi de la trajectoire de conduite optimisée à l'appareil de commande du véhicule A, le procédé comprend également :

l'obtention des informations de fonctionnement du conducteur du véhicule A et des informations sur le véhicule environnant lorsqu'il est détecté que le conducteur du véhicule A prend le contrôle du véhicule A ;
l'ajustement du coefficient de style de conduite du conducteur du véhicule A sur la base des informations de fonctionnement et des informations sur le véhicule environnant pour obtenir un coefficient de style de conduite ajusté ; et
le stockage du coefficient de style de conduite ajusté.

9. Procédé selon la revendication 1, dans lequel le procédé comprend également :

le calcul du coefficient de style de conduite du conducteur du véhicule A selon un algorithme génétique lorsqu'une instruction de conduite manuelle est reçue ; et
le stockage du coefficient de style de conduite du conducteur du véhicule A.

10. Appareil d'obtention de trajectoire de conduite automatique (300), comprenant :

une première unité d'obtention (301), configurée pour obtenir un coefficient de style de conduite d'un conducteur d'un véhicule A ; et
une unité de calcul (302), configurée pour obtenir une fonction de coût du conducteur du véhicule A par un calcul basé sur le coefficient de style de conduite du conducteur du véhicule A,
dans lequel la fonction de coût est utilisée pour représenter les coûts payés lorsque le véhicule A se déplace d'un noeud initial à un noeud actuel dans une trajectoire de conduite automatique du véhicule A, le noeud actuel se trouvant après le noeud initial ; dans lequel la fonction de coût est une fonction construite sur la base d'au moins un élément parmi un élément de sécurité S, un élément de confort C, un élément de conformité R et un élément d'efficacité T, dans lequel l'élément de sécurité S, l'élément de confort C, l'élément de conformité R et l'élément d'efficacité T sont des paramètres d'habitude de conduite du conducteur du véhicule A, l'élément de sécurité S est utilisé pour représenter une habitude de suivi de véhicule du véhicule A et une distance de sécurité entre le véhicule A et un obstacle environnant, l'élément de confort C est utilisé pour représenter un degré de changement de vitesse et un degré de changement d'accélération du véhicule A, l'élément de conformité R est utilisé pour représenter si le véhicule A respecte le code de la route, et l'élément d'efficacité T est utilisé pour représenter une heure d'arrivée à destination, des priorités de freinage et de direction pour éviter des obstacles, ainsi qu'un comportement de dépassement et un comportement visant à céder le passage générés dans un processus dans lequel le véhicule A et un véhicule environnant du véhicule A se déplacent ; et
l'unité de calcul (302) est configurée pour obtenir la trajectoire de conduite automatique du véhicule A sur une première carte spatio-temporelle tridimensionnelle par un calcul selon la fonction de coût du conducteur.

11. Appareil d'obtention de trajectoire de conduite automatique (300) selon la revendication 10, dans lequel la première unité d'obtention (301) comprend :

une sous-unité d'identification (3011), configurée pour identifier une identité du conducteur du véhicule A lorsqu'une instruction de conduite automatique est reçue ; et
une sous-unité d'obtention (3012), configurée pour obtenir le coefficient de style de conduite du conducteur du véhicule A sur la base de l'identité du conducteur du véhicule A.

12. Appareil d'obtention de trajectoire de conduite automatique (300) selon la revendication 10 ou 11, dans lequel l'unité de calcul (302) est spécifiquement configurée pour :
calculer des informations de localisation d'un noeud dans la trajectoire de conduite automatique du véhicule A pour obtenir la trajectoire de conduite automatique du véhicule A, dans lequel des informations de localisation d'un second noeud qui est adjacent à un premier noeud dans la trajectoire de conduite du véhicule A et qui est obtenu après que le premier noeud a été obtenu par un calcul basé sur des informations de localisation du premier noeud à l'aide du procédé suivant :

l'obtention d'informations de localisation de $N_A*N_\theta$ noeuds candidats par un calcul basé sur les informations de localisation du premier noeud, un ensemble de changements d'accélération du véhicule A et un ensemble de changements d'angle de lacet du véhicule A, dans lequel $N_A$ est une quantité d'éléments dans l'ensemble de changements d'angle de lacet, $N_\theta$ est une quantité d'éléments dans l'ensemble de changements d'accélération, et $N_A$ et $N_\theta$ sont tous deux des entiers supérieurs à 1 ; et
l'évaluation d'informations de localisation de chaque noeud candidat dans les informations de localisation des $N_A*N_\theta$ noeuds candidats selon une fonction heuristique et la fonction de coût pour obtenir les informations de localisation du second noeud, dans lequel les informations de localisation du second noeud sont des informations de localisation d'un noeud avec une plus petite valeur d'évaluation dans les informations de localisation des $N_A*N_\theta$ noeuds candidats, et la fonction heuristique est utilisée pour représenter les coûts qui doivent être payés lorsque le véhicule A se déplace du premier noeud vers un point cible dans la trajectoire de conduite automatique du véhicule A.

13. Appareil d'obtention de trajectoire de conduite automatique (300) selon l'une quelconque des revendications 10 à 12, dans lequel l'appareil d'obtention de trajectoire de conduite automatique (300) comprend également :

une unité de conversion (303), configurée pour convertir une carte spatiale bidimensionnelle en une seconde carte spatio-temporelle tridimensionnelle avant que l'unité de calcul n'obtienne la trajectoire de conduite automatique du véhicule A sur la première carte spatio-temporelle tridimensionnelle par un calcul selon la fonction de coût du conducteur ;
une seconde unité d'obtention (304), configurée pour obtenir une zone d'enveloppe de sécurité de carrosserie de véhicule du véhicule environnant du véhicule A ; et
une unité de suppression (305), configurée pour supprimer, à partir de la seconde carte spatio-temporelle tridimensionnelle,
une zone correspondant à la zone d'enveloppe de sécurité de carrosserie de véhicule du véhicule environnant du véhicule A,
pour obtenir la première carte spatio-temporelle tridimensionnelle.

14. Appareil d'obtention de trajectoire de conduite automatique (300) selon la revendication 13, dans lequel la seconde unité d'obtention (304) comprend :

une sous-unité de calcul (3041), configurée pour obtenir une trajectoire de conduite prédite du véhicule environnant du véhicule A par un calcul basé sur un style de conduite d'un conducteur, une vitesse, une accélération et un angle de lacet du véhicule environnant du véhicule A ; et
une sous-unité de détermination (3042), configurée pour déterminer la zone d'enveloppe de sécurité de carrosserie de véhicule du véhicule environnant du véhicule A sur la base de la trajectoire de conduite prédite du véhicule environnant du véhicule A et du style de conduite du conducteur du véhicule environnant du véhicule A.

15. Appareil d'obtention de trajectoire de conduite automatique selon la revendication 14, dans lequel la sous-unité de calcul (3041) est en outre configurée pour :
avant d'obtenir la trajectoire de conduite prédite du véhicule environnant du véhicule A par un calcul basé sur le style de conduite du conducteur, la vitesse, l'accélération et l'angle de lacet du véhicule environnant du véhicule A, obtenir le style de conduite du conducteur du véhicule environnant du véhicule A par un calcul basé sur la vitesse et l'accélération du véhicule environnant du véhicule A.

16. Appareil d'obtention de trajectoire de conduite automatique selon la revendication 15, dans lequel l'appareil d'obtention de trajectoire de conduite automatique comprend également :

une unité d'optimisation, configurée pour optimiser la trajectoire de conduite automatique du véhicule A sur la base d'un modèle cinématique de véhicule afin d'obtenir une trajectoire de conduite optimisée ; et
une unité d'envoi, configurée pour envoyer une trajectoire de conduite optimisée à un appareil de commande du véhicule A.

**17.** Appareil d'obtention de trajectoire de conduite automatique (300) selon la revendication 16, dans lequel la première unité d'obtention (301) est en outre configurée pour : après qu'une unité d'envoi (307) a envoyé la trajectoire de conduite optimisée à un appareil de commande du véhicule A, obtenir des informations de fonctionnement du conducteur du véhicule A et des informations sur le véhicule environnant lorsqu'il est détecté que le conducteur du véhicule A prend le contrôle du véhicule A ;
l'appareil d'obtention de trajectoire de conduite (300) comprend également :

une unité d'ajustement (308), configurée pour ajuster le coefficient de style de conduite du conducteur du véhicule A sur la base des informations de fonctionnement et des informations sur le véhicule environnant pour obtenir un coefficient de style de conduite ajusté ; et
une première unité de stockage (309), configurée pour stocker le coefficient de style de conduite ajusté.

**18.** Appareil d'obtention de trajectoire de conduite automatique (300) selon la revendication 10, dans lequel le 'appareil d'obtention de trajectoire de conduite automatique (300) comprend également une seconde unité de stockage (310), configurée pour stocker le coefficient de style de conduite du conducteur du véhicule A ; et
l'unité de calcul (302) est en outre configurée pour calculer le coefficient de style de conduite du conducteur du véhicule A selon un algorithme génétique lorsqu'une instruction de conduite manuelle est reçue.

**19.** Support de stockage lisible par ordinateur (602), dans lequel le support de stockage lisible par ordinateur comprend une instruction de programme, et lorsque l'instruction de programme est exécutée sur un ordinateur, l'ordinateur est en mesure de réaliser le procédé selon l'une quelconque des revendications 1 à 9.

S101

A driving track obtaining apparatus obtains a driving style
coefficient of a driver of a vehicle A

S102

The driving track obtaining apparatus obtains a cost function of the driver of the
vehicle A through calculation based on the driving style coefficient of the driver of
the vehicle A

S103

The driving track obtaining apparatus obtains a driving track of the vehicle A on a
first three-dimensional spatial-temporal map through calculation according to the cost
function

FIG. 1

S201. A driving track obtaining apparatus obtains a driving style of a driver of a surrounding vehicle of a vehicle A through calculation

S202. The driving track obtaining apparatus obtains a predicted driving track of the surrounding vehicle of the vehicle A through calculation, and determines a vehicle body safety envelope area of the vehicle based on the predicted driving track of the surrounding vehicle of the vehicle A and the driving style of the driver of the surrounding vehicle of the vehicle A

S203. The driving track obtaining apparatus detects whether the vehicle A receives an automatic driving instruction

No

S205. The driving track obtaining apparatus obtains the driving style coefficient of the driver of the vehicle A through calculation, and stores the driving style coefficient of the driver

Yes

S204. The driving track obtaining apparatus obtains a driving style coefficient of a driver of the vehicle A, and calculates a cost function of the driver of the vehicle A

S206. The driving track obtaining apparatus obtains a driving track of the vehicle A on a first three-dimensional spatial-temporal map through calculation according to the cost function

S207. The driving track obtaining apparatus optimizes the driving track of the vehicle A to obtain an optimized driving track

S208. The driving track obtaining apparatus sends the optimized driving track to a control apparatus of the vehicle A

S209. The driving track obtaining apparatus determines that whether the driver of the vehicle A takes over the vehicle A

No

Yes

S210. The driving track obtaining apparatus adjusts the driving style coefficient of the driver of the vehicle A, and stores the driving style coefficient of the driver

FIG. 2

300

301
First obtaining unit

302
Calculation unit

303
Conversion unit

304
Second obtaining unit

305
Deletion unit

306
Optimization unit

307
Sending unit

308
Adjustment unit

309
First storage unit

310
Second storage unit

FIG. 3

301

Identification subunit — 3011

Obtaining subunit — 3012

FIG. 4

304

Calculation subunit — 3041

Determining subunit — 3042

FIG. 5

600

Processor — 601

Memory — 602

Application program code

Communications interface — 603

FIG. 6

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- DE 102011082480 A1

- US 2015266475 A1